# EUROPÄISCHE PATENTANMELDUNG

(11) **EP 4 560 752 A1**
(43) Veröffentlichungstag der Anmeldung: **28.05.2025**
(21) Anmeldenummer: 24152205.1
(22) Anmeldetag: 16.01.2024
(51) Int. Cl.: H01M 10/04, H01M 10/0585

(54) **VERFAHREN UND VORRICHTUNGEN ZUM HERSTELLEN VON MONOZELLEN UND VON DARAUS GEBILDETEN ZELLSTAPELN FÜR BATTERIEN**

(30) Priorität: 22.11.2023 DE 102023132600
(71) Anmelder: Grob-Werke GmbH & Co. KG, 87719 Mindelheim (DE)
(72) Erfinder: Hierl, Patrick, 87742 Dirlewang (DE); Fritz, Alexander, 89297 Schießen (DE); Glück, Moritz, 82398 Polling (DE)
(74) Vertreter: KASTEL Patentanwälte PartG mbB

(57) **Zusammenfassung**

Um ein Herstellen von Monozellen (86) in industrieller Großserienproduktion, insbesondere hinsichtlich technisch einfacheren Aufbaus, zu verbessern schafft die Erfindung ein Monozell-Herstellverfahren zum Herstellen von Monozellen (86) für eine Batterie, wobei die Monozelle (86) jeweils ein erstes Elektrodensegment (36.1), ein zweites Elektrodensegment (36.2) und eine Separatorschicht zwischen dem ersten Elektrodensegment (36.1) und dem zweiten Elektrodensegment (36.2) sowie wenigstens eine Separatorschicht an einer abgewandten Oberfläche des ersten und/oder zweiten Elektrodensegments (36.1, 36.2) aufweist, wobei das Monozell-Herstellverfahren die Schritte umfasst:
A) Bereitstellen eines ersten Elektrodenstrangs (28) mit einer ersten Separatorbahn (34.1) und daran mit Abstand zueinander angebrachten und fixierten ersten Elektrodensegmenten (36.1);
B) Positionieren und direktes Laminieren von zweiten Elektrodensegmenten (36.2) und einer zweiten Separatorbahn (34.2) auf dem ersten Elektrodenstrang, (28) so dass die ersten und die zweiten Elektrodensegmente (36.1, 36.2) zueinander ausgerichtet übereinanderliegen,
C) Abschneiden der Monozellen (86) von dem in Schritt B) erhaltenen Verbundstrang (88). Außerdem werden entsprechende Vorrichtungen zum Durchführen beschrieben.

## Beschreibung

Die Erfindung betrifft ein Monozell-Herstellverfahren zum Herstellen von Monozellen für eine Batterie, wobei die Monozelle jeweils ein erstes Elektrodensegment, ein zweites Elektrodensegment und eine Separatorschicht zwischen dem ersten Elektrodensegment und dem zweiten Elektrodensegment sowie wenigstens eine Separatorschicht an einer abgewandten Oberfläche des ersten und/oder zweiten Elektrodensegments aufweist. Weiter betrifft die Erfindung ein Batteriezellstapelherstellverfahren zum Herstellen eines Zellstapels für eine Batterie unter Einsatz eines solchen Monozellherstellverfahrens. Weiter betrifft die Erfindung eine Monozell-Herstellvorrichtung zum Herstellen von Monozellen der oben genannten Art für eine Batterie sowie eine mit einer solchen Monozell-Herstellvorrichtung versehene Zellstapelherstellvorrichtung. Schließlich betrifft die Erfindung eine computerimplementierte Steuerung für solche Vorrichtungen.

Die Erfindung liegt insbesondere auf dem Gebiet der automatisierten und computergestützt gesteuerten Herstellung von Monozellen und Batteriestapeln aus derartigen Monozellen.

Zum technologischen Hintergrund wird auf folgende Literaturstellen verwiesen:
[1] WO 2020/192 845 A1
[2] DE 10 2017 216 156 A1
[3] EP 3 955 364 A1
[4] EP 3 471 188 B1
[5] EP3 069 407 B1

Aus [1] sind Verfahren und Vorrichtungen zur Bereitstellung von Elektrodensträngen sowie zur Herstellung von Monozellen und daraus gebildeten Batteriestapeln bekannt. Insbesondere beschreibt [1] eine Anlage zur Produktion von Batteriezellen, bei der als Elektrodenstränge ein Anodenstrang mit auf einem ersten bahnförmigen Separator (S) angebrachten Anoden (A) und ein Kathodenstrang mit auf einem zweiten bahnförmigen Separator (S) angebrachten Kathoden (K) bereitgestellt werden, wobei daraus ein Strangverbund gebildet wird, von dem Monozellen vereinzelt werden. Im Gegensatz zum Verfahren des Z-Faltens von Batteriezellen handelt es sich hierbei um einen kontinuierlichen Prozess. Der Vorteil liegt hierbei in der höheren Ausbringung aufgrund eines kontinuierlichen Verfahrens. Hierzu werden in der Anlage in der nachfolgenden Reihenfolge Separator, Anode, Separator, Kathode (SASK) miteinander laminiert. Durch Stapeln von vereinzelten SASK-Lagen entsteht die Grundlage der Batteriezelle.

In der Literaturstelle [2] wird ein Verfahren zur Herstellung von Monozellen beschrieben, bei dem der Separator zunächst auf ein Vakuumband angesaugt wird. Parallel hierzu werden Elektroden auf einer Trommel angesaugt und durch einen Laser vereinzelt. Die vereinzelte Elektrode wird auf den Separator übergeben und durch diesen hindurch auf das Vakuumband angesaugt. Hierauf wird ein zweiter Separator aufgebracht und anschließend an ein Transportsystem mit auf einer Führungsbahn einzeln beweglichen Transporteinheiten (zuweilen auch Moversystem genannt) übergeben. Hier wird die Separatorbahn geschnitten und eine weitere Elektrode, die wie die erste bereitgestellt wird, aufgelegt. Das Paket wird mechanisch geklemmt und zur Abwurfstelle transportiert.

Die Literaturstelle [3] bezieht sich ebenfalls auf die Herstellung von Monozellen aus Anode, Kathode und zwei Separatoren. Im ersten Schritt wird die erste Elektrode vereinzelt und auf den Separator auflaminiert. Anschließend wird dieser Halbzellstrang einem zweiten Prozess zugeführt. Dort wird zusätzlich die vorvereinzelte Elektrode und der Separator für die zweite Halbzelle eingebracht. Dabei erfolgt zunächst nur eine Positionierung der zweiten Elektrode im Verhältnis zur ersten Elektrode im Halbzellstrang und ein Darüberlegen des zweiten Separators. Diese Kombination wird lose, nur mittels eines Vakuumbandes zu einer Laminierstelle gefördert. Die Lamination der ersten Halbzelle mit der zweiten Elektrode und dem zweiten Separator erfolgt, nachdem die Sheets positioniert und zusammengeführt wurden. Es besteht das Problem, dass die Elektroden auf dem Weg zur Laminationsstelle auf dem Separator wandern können.

In der Literaturstelle [4] wird ein Grundaufbau einer Batteriezelle beschrieben. Zur Herstellung wird zunächst ein Paket aus drei Lagen, mit einem ersten Separator, einem zweiten Separator und einer dazwischen liegenden Elektrode erzeugt. Anschließend wird die zweite Elektrode hinzugefügt.

Die Literaturstelle [5] beschreibt ebenfalls ein Verfahren zur Herstellung der Monozelle. Hier wird im ersten Schritt ein dreischichtiger Aufbau aus Separator - Anode - Separator erzeugt (oder auch Kathode) und zusammenlaminiert. Anschließend wird die jeweils andere Elektrode nachträglich auf den Verbund aufgebracht und auflaminiert. Durch anschließendes Vereinzeln der Monozellen wird dann der Zellstapel hergestellt.

Die Erfindung hat sich zur Aufgabe gestellt, Verfahren und Vorrichtungen zum Herstellen von Monozellen für die industrielle Großserienproduktion, insbesondere hinsichtlich technisch einfacheren Aufbaus, zu verbessern.

Zum Lösen dieser Aufgabe schafft die Erfindung die Verfahren und Vorrichtungen gemäß den unabhängigen Ansprüchen.

Vorteilhafte Ausgestaltungen sind Gegenstand der Unteransprüche.

Die Erfindung schafft gemäß einem ersten Aspekt davon ein Monozell-Herstellverfahren zum Herstellen von Monozellen für eine Batterie, wobei die Monozelle jeweils ein erstes Elektrodensegment, ein zweites Elektrodensegment und eine Separatorschicht zwischen dem ersten Elektrodensegment und dem zweiten Elektrodensegment sowie wenigstens eine Separatorschicht an einer abgewandten Oberfläche des ersten und/oder zweiten Elektrodensegments aufweist, wobei das Monozell-Herstellverfahren die Schritte umfasst:
A) Bereitstellen eines ersten Elektrodenstrangs mit einer ersten Separatorbahn und daran mit Abstand zueinander angebrachten und fixierten ersten Elektrodensegmenten;
B) Positionieren und direktes Laminieren von zweiten Elektrodensegmenten und einer zweiten Separatorbahn auf dem ersten Elektrodenstrang, so dass die ersten und die zweiten Elektrodensegmente zueinander ausgerichtet übereinanderliegen,
C) Abschneiden der Monozellen von dem in Schritt B) erhaltenen Verbundstrang.

In einigen Ausführungsformen sind die ersten Elektrodensegmente Anodensegmente und die zweiten Elektrodensegmente Kathodensegmente. In einigen Ausführungsformen sind die ersten Elektrodensegmente Kathodensegmente und die zweiten Elektrodensegmente Anodensegmente.

Vorzugsweise umfasst Schritt B) den Schritt:
B1) Positionsgenaues Übergeben einzelner zweiter Elektrodensegmente auf eine Transporteinrichtung mit Heizeinrichtung, insbesondere eine Vakuum-Heizwalze.

Vorzugsweise umfasst Schritt B) den Schritt:
B2) gezieltes Erwärmen des zweiten Elektrodensegments.

Vorzugsweise umfasst Schritt B) den Schritt:
B3) Anheben der zweiten Elektrodensegmente auf eine sich oberhalb einer Schneidebene, in der die zweiten Elektrodensegmente vereinzelt werden, befindliche Fixierstelle.

Vorzugsweise umfasst Schritt B) den Schritt:
B4) Laminieren des ersten Elektrodenstrangs, insbesondere der ersten Separatorbahn des ersten Elektrodenstrangs, und des zweiten Elektrodensegments zwischen zwei Walzen, gegebenenfalls zusammen mit der zweiten Separatorbahn.

Vorzugsweise umfasst Schritt B) den Schritt:
B5) Laminieren des ersten Elektrodenstrangs, insbesondere der ersten Separatorbahn des ersten Elektrodenstrangs, und des zweiten Elektrodensegments, gegebenenfalls zusammen mit der zweiten Separatorbahn, zwischen unbeschichteten Hartmetallflächen und/oder zwischen zwei harten Oberflächen.

Bei einigen Ausführungsformen erfolgt das direkte Laminieren des zweiten Elektrodensegments auf den ersten Elektrodenstrang - gegebenenfalls zusammen mit der zweiten Separatorbahn - zwischen beschichten Flächen, insbesondere zwischen beschichteten Hartmetallflächen, wovon wenigstens eine insbesondere als Walzenfläche ausgebildet ist.

Vorzugsweise umfasst Schritt B) den Schritt:
B6) Reinigen einer von einer Transporteinheit zum Anliefern des zweiten Elektrodensegments abgehobenen Seite des zweiten Elektrodensegments.

Vorzugsweise umfasst Schritt B) den Schritt:
B7) Aufpressen des ersten Elektrodenstrangs mittels einer Laminierwalze auf eine Vakuum-Heizwalze oder temperierte Walze oder extern temperierte Vakuumwalze, die die zweiten Elektrodensegmente transportiert.

Vorzugsweise umfasst Schritt B) den Schritt:
i) Bereitstellen eines bahnförmigen zweiten Elektrodensubstrats, um davon zweite Elektrodensegmente zu vereinzeln.

Vorzugsweise umfasst Schritt B) den Schritt:
ii) Aufnehmen eines bahnförmigen zweiten Elektrodensubstrats oder Aufnehmen von zweiten Elektrodensegmenten mittels eines Transportsystems, das entlang einer Führungsbahn einzeln bewegbare Transporteinheiten aufweist.

Vorzugsweise umfasst Schritt B) den Schritt:
iii) ebenes Bewegen eines zweiten Elektrodensubstrats entlang einer Schneidebene und Schneiden des bahnförmigen zweiten Elektrodensubstrats in der Schneidebene, um zweite Elektrodensegmente abzuschneiden, insbesondere derart, dass diese jeweils einzeln auf einer der Transporteinheiten eines Transportsystems angeordnet sind.

Vorzugsweise umfasst Schritt B) den Schritt:
iv) Einstellen eines Abstands zwischen zweiten Elektrodensegmenten mittels Relativbewegung von Transporteinheiten eines Transportsystems, um die zweiten Elektrodensegmente relativ zueinander zu positionieren.

Vorzugsweise umfasst Schritt B) den Schritt:
v) Aufbringen und Fixieren der relativ zueinander positionierten zweiten Elektrodensegmente auf dem ersten Elektrodenstrang.

Vorzugsweise umfasst Schritt B) die Schritte:
vi) Bereitstellen der zweiten Separatorbahn und
vi.1) Aufbringen und Fixieren der zweiten Separatorbahn zusammen mit den zweiten Elektrodensegmenten auf dem ersten Elektrodenstrang oder
vi.2) Aufbringen und Fixieren der zweiten Separatorbahn auf dem ersten Elektrodenstrang, an dem die zweiten Elektrodensegmente aufgebracht und fixiert sind.

Vorzugsweise umfasst Schritt ii) den Schritt:
ii.1) Ansaugen des bahnförmigen zweiten Elektrodensubstrats oder bereits vereinzelter zweiter Elektrodensegmente an einer Aufnahmestelle auf den Transporteinheiten.

Vorzugsweise umfasst Schritt ii) den Schritt:
ii.2) Transportieren des bahnförmigen zweiten Elektrodensubstrats mittels der Transporteinheiten zu einer Vereinzelungsstelle, wo eine ebene Oberfläche zum Schneiden als Schneidebene bereitgestellt wird.

Vorzugsweise umfasst Schritt ii) den Schritt:
ii.3) Bereitstellen von Transporteinheiten mit austauschbaren Warenträgern, wobei die Warenträger entsprechend des Elektrodenformats der zweiten Elektrodensegmente aus einem Sortiment unterschiedlicher Warenträger ausgewählt werden.

Vorzugsweise umfasst Schritt iii) den Schritt:
iii.1) Bereitstellen einer horizontalen Schneidebene und horizontales Bewegen entlang der Schneidebene.

Vorzugsweise umfasst Schritt iii) den Schritt:
iii.2) Bereitstellen einer im Wesentlichen vertikalen Schneidebene und Bewegen entlang dieser Schneidebene.

Vorzugsweise umfasst Schritt iii) den Schritt:
iii.4) Schneiden auf einer ebenen Oberfläche.

Vorzugsweise umfasst Schritt iii) den Schritt:
iii.5) Schneiden entlang einer ebenen Schneidkontur zum Formen von Seitenrändern des zweiten Elektrodensegments.

Vorzugsweise umfasst Schritt iii) den Schritt:
iii.6) Schneiden mittels eines gelenkten Laserstrahls.

Vorzugsweise umfasst Schritt iii) den Schritt:
iii.7) Ausschneiden von Ableiterfahnen an wenigstens einem Seitenrand des zweiten Elektrodensegments.

Vorzugsweise umfasst Schritt iii) den Schritt:
iii.8) Durchführen eines zweidimensionalen Laserschnitts innerhalb der Schneidebene. Vorzugsweise umfasst Schritt iii) den Schritt:
iii.9) Reinigen des zweiten Elektrodensegments (36.2) nach dem Schneiden.

Vorzugsweise umfasst Schritt iv) den Schritt:
iv.1) Anpassen des Abstands mittels einer Steuerungssoftware.

Vorzugsweise umfasst Schritt iii) den Schritt:
iv.2) Wegbewegen einer Transporteinheit, die ein soeben abgeschnittenes zweites Elektrodensegment trägt, von einer Schneid- oder Vereinzelungsstelle.

Vorzugsweise umfasst Schritt iii) den Schritt:
iv.3) Weitertransportieren des zweiter Elektrodensegments zu einer Einrichtung zum Durchführen von Schritt v).

Vorzugsweise umfasst Schritt iii) den Schritt:
iv.4) Auslassen eines zweiten Elektrodensegments an einer ansonsten mit zweitem Elektrodensegment zu besetzenden Stelle, um im Prozess der Herstellung von Monozellen die Herstellung einer Halbzelle wie insbesondere ein SAS- oder SKS-Paket zu ermöglichen.

Vorzugsweise umfasst Schritt iii) den Schritt:
iv.5) Reinigen des abgeschnittenen zweiten Elektrodensegments und/oder der Transporteinheit.

Bei einigen Ausführungsformen umfasst Schritt B) die Schritte:
B.1) Weglassen einer zweiten Elektrode an mehreren Stellen, so dass jeweils ein Leerabschnitt mit der gleichen vorbestimmten Länge wie der erste Elektrodenhalbzellabschnitt entsteht, der aus einem Längenabschnitt der zweiten Separatorbahn ohne zweite Elektrode gebildet ist, und
B.2) Ausrichten jedes Leerabschnitts mit einem ersten Elektrodensegment, so dass in dem in Schritt B) gebildeten Verbundstrang an den mehreren Stellen jeweils ein Abschlusszellenbereich entsteht, der einen Schichtaufbau aus einem Längenabschnitt der ersten Separatorbahn, dem ersten Elektrodensegment und einem Längenabschnitt der zweiten Separatorbahn, jedoch kein zweites Elektrodensegment aufweist.

Vorzugsweise umfasst Schritt C) den Schritt:
C1) Vereinzeln der Abschlusszellenbereiche von dem Zellverbundstrang, um Abschlusszellen zu erhalten, die einen Schichtaufbau aus Separator, erster Elektrode und Separator aufweist.

Es ist bevorzugt, dass Schritt A) enthält:
a) Bereitstellen eines bahnförmigen ersten Elektrodensubstrats;
b) Aufnehmen des bahnförmigen ersten Elektrodensubstrats mittels eines ersten Transportsystems, das entlang einer Führungsbahn einzeln bewegbare Transporteinheiten aufweist, und ebenes Bewegen des ersten Elektrodensubstrats entlang einer Schneidebene;
c) Schneiden des bahnförmigen ersten Elektrodensubstrats in der Schneidebene, um erste Elektrodensegmente abzuschneiden, die jeweils einzeln auf einer der Transporteinheiten angeordnet sind;
d) Einstellen eines Abstands zwischen abgeschnittenen ersten Elektrodensegmenten mittels Relativbewegung der Transporteinheiten, um die Elektrodensegmente relativ zueinander zu positionieren;
e) Bereitstellen der ersten Separatorbahn;
f) Aufbringen und Fixieren der relativ zueinander positionierten ersten Elektrodensegmente auf der ersten Separatorbahn.

Vorzugsweise umfasst Schritt b) den Schritt:
b1) Ansaugen des bahnförmigen ersten Elektrodensubstrats an einer Aufnahmestelle auf den Transporteinheiten.

Vorzugsweise umfasst Schritt b) den Schritt:
b2) Transportieren des bahnförmigen ersten Elektrodensubstrats mittels der Transporteinheiten zu einer Vereinzelungsstelle, wo eine ebene Oberfläche zum Schneiden als Schneidebene bereitgestellt wird.

Vorzugsweise umfasst Schritt b) den Schritt:
b3) Bereitstellen von Transporteinheiten mit austauschbaren Warenträgern, wobei die Warenträger entsprechend des herzustellenden Elektrodenformats der ersten Elektrode aus einem Sortiment unterschiedlicher Warenträger ausgewählt werden.

Vorzugsweise umfasst Schritt b) den Schritt:
b4) Bereitstellen einer horizontalen Schneidebene und horizontales Bewegen entlang der Schneidebene.

Vorzugsweise umfasst Schritt b) den Schritt:
b5) Bereitstellen einer im Wesentlichen vertikalen Schneidebene und Bewegen entlang dieser Schneidebene.

Vorzugsweise umfasst Schritt c) den Schritt:
c1) Schneiden auf einer ebenen Oberfläche.

Vorzugsweise umfasst Schritt c) den Schritt:
c2) Schneiden entlang einer ebenen Schneidkontur zum Formen von Seitenrändern des ersten Elektrodensegments.

Vorzugsweise umfasst Schritt c) den Schritt:
c3) Schneiden mittels eines gelenkten Laserstrahls.

Vorzugsweise umfasst Schritt c) den Schritt:
c4) Ausschneiden von Ableiterfahnen an wenigstens einem Seitenrand des ersten Elektrodensegments.

Vorzugsweise umfasst Schritt c) den Schritt:
c5) Durchführen eines zweidimensionalen Laserschnitts innerhalb der Schneidebene.

Vorzugsweise umfasst Schritt c) den Schritt:
c6) Reinigen des ersten Elektrodensegments (36.1) nach dem Schneiden.

Vorzugsweise umfasst Schritt d) den Schritt:
d1) Anpassen des Abstands mittels einer Steuerungssoftware.

Vorzugsweise umfasst Schritt d) den Schritt:
d2) Wegbewegen einer Transporteinheit (62), die ein soeben abgeschnittenes erstes Elektrodensegment trägt, von einer Schneid- oder Vereinzelungsstelle.

Vorzugsweise umfasst Schritt d) den Schritt:
d3) Weitertransportieren des abgeschnittenen ersten Elektrodensegments zu einer Einrichtung zum Durchführen von Schritt f).

Vorzugsweise umfasst Schritt d) den Schritt:
d4) Auslassen eines ersten Elektrodensegments an einer ansonsten mit Elektrodensegment zu besetzenden Stelle auf dem Separator, um im Prozess der Herstellung von Monozellen die Herstellung einer Halbzelle wie insbesondere ein SAS- oder SKS-Paket zu ermöglichen.

Vorzugsweise umfasst Schritt d) den Schritt:
d5) Reinigen des abgeschnittenen ersten Elektrodensegments und/oder der Transporteinheit.

Vorzugsweise umfasst Schritt f) den Schritt:
f1) Positionsgenaues Übergeben der vereinzelten ersten Elektrodensegmente auf eine erste Transporteinrichtung mit Heizeinrichtung, insbesondere eine erste Vakuum-Heizwalze.

Vorzugsweise umfasst Schritt f) den Schritt:
f2) gezieltes Erwärmen des ersten Elektrodensegments.

Vorzugsweise umfasst Schritt f) den Schritt:
f3) Anheben der ersten Elektrodensegmente auf eine sich oberhalb der Schneidebene befindliche Fixierstelle.

Vorzugsweise umfasst Schritt f) den Schritt:
f4) Laminieren von erster Separatorbahn und erstem Elektrodensegment zwischen zwei Walzen. Vorzugsweise umfasst Schritt f) den Schritt:
f5) Laminieren von erster Separatorbahn und erstem Elektrodensegment zwischen unbeschichteten Hartmetallflächen und/oder zwischen zwei harten Oberflächen.

Bei einigen Ausführungsformen erfolgt das Laminieren des ersten Elektrodensegments auf die erste Separatorbahn zwischen beschichten Flächen, insbesondere zwischen beschichteten Hartmetallflächen, wovon wenigstens eine insbesondere als Walzenfläche ausgebildet ist.

Vorzugsweise umfasst Schritt f) den Schritt:
f6) Reinigen einer von der Transporteinheit abgehobenen Seite des ersten Elektrodensegments.

Vorzugsweise umfasst Schritt f) den Schritt:
f7) Aufpressen der ersten Separatorbahn mittels einer Laminierwalze auf eine Vakuum-Heizwalze oder temperierte Walze oder extern temperierte Vakuumwalze, die die ersten Elektrodensegmente transportiert.

Gemäß einem weiteren Aspekt schafft die Erfindung ein Batteriezellstapelherstellverfahren zum Herstellen eines Zellstapels für eine Batterie, umfassend Durchführen des Monozell-Herstellverfahrens nach einer der voranstehenden Ausgestaltungen und Aufstapeln der dadurch hergestellten Monozellen zu einem Zellstapel.

Bei einigen Ausführungsformen umfasst der Schritt des Aufstapelns:
D1) Beginnen oder Enden des Stapelns mit einer in Schritt C1) erhaltenen Abschlusszelle, so dass jeder Batteriezellstapel an jedem Ende mit einer ersten Elektrode und einem Separator abschließt.

Bei einigen Ausführungsformen umfasst der Schritt des Aufstapelns:
D2) Bilden mehrerer Batteriezellstapel an mehreren Stapelplätzen, die in einer Transportrichtung der Mono- und Abschlusszellen hintereinander angeordnet sind.

Bei einigen Ausführungsformen umfasst der Schritt des Aufstapelns:
D3) Beginnen eines jeden Batteriezellstapels mit einer Abschlusszelle.

Vorzugsweise umfasst Schritt B.1) des im Zuge des Batteriezellherstellverfahrens durchgeführten Monozell-Herstellverfahrens den Schritt:
B.1.a) flexibles Erzeugen eines Leerabschnittes auf einen Steuerbefehl hin.

Vorzugsweise umfasst Schritt B.1) des im Zuge des Batteriezellherstellverfahrens durchgeführten Monozell-Herstellverfahrens den Schritt:
B.1.b) Erzeugen von Leerabschnitten abhängig von einer Anzahl von Zellen in einem oder mehreren der in Schritt e) entstehenden Batteriezellstapeln.

Vorzugsweise umfasst Schritt B.1) des im Zuge des Batteriezellherstellverfahrens durchgeführten Monozell-Herstellverfahrens den Schritt:
b.1.c) Erzeugen von Leerabschnitten abhängig von einem Füllgrad von Stapelplätzen.

Gemäß einem weiteren Aspekt schafft die Erfindung eine Monozell-Herstellvorrichtung, umfassend eine Elektrodenstrangbereitstelleinrichtung zum Bereitstellen eines ersten Elektrodenstrangs mit einer ersten Separatorbahn und daran mit Abstand zueinander angebrachten und fixierten ersten Elektrodensegmenten,
eine Positionier- und Laminiereinrichtung, die dazu eingerichtet ist, zweite Elektrodensegmente auf dem ersten Elektrodenstrang ausgerichtet zu den ersten Elektrodensegmenten zu positionieren und dabei die zweiten Elektrodensegmente und eine zweite Separatorbahn auf den ersten Elektrodenstrang direkt zu laminieren, und eine Vereinzelungseinrichtung zum Vereinzeln von Monozellen durch Abschneiden von dem durch die Positionier- und Laminiereinrichtung erhaltenen Strang.

Vorzugsweise weisen die Positionier- und Laminiereinrichtung oder die Elektrodenstrangbereitstelleinrichtung oder jeweils beide dieser Einrichtungen eine Elektrodensubstratbereitstelleinrichtung zum Bereitstellen eines bahnförmigen Elektrodensubstrats auf.

Vorzugsweise weisen die Positionier- und Laminiereinrichtung oder die Elektrodenstrangbereitstelleinrichtung oder jeweils beide dieser Einrichtungen ein Transportsystem auf, das entlang einer Führungsbahn einzeln bewegbare Transporteinheiten aufweist, wobei das Transportsystem dazu eingerichtet ist, das von der Elektrodensubstratbereitstelleinrichtung bereitgestellte bahnförmige Elektrodensubstrat aufzunehmen und eben entlang einer Schneidebene zu bewegen.

Vorzugsweise weisen die Positionier- und Laminiereinrichtung oder die Elektrodenstrangbereitstelleinrichtung oder jeweils beide dieser Einrichtungen eine Schneideinrichtung zum Schneiden des Elektrodensubstrats entlang einer ein- oder zweidimensional in der Schneidebene verlaufenden Schneidkontur, um Elektrodensegmente von dem Elektrodensubstrat abzuschneiden auf.

Vorzugsweise weisen die Positionier- und Laminiereinrichtung oder die Elektrodenstrangbereitstelleinrichtung oder jeweils beide dieser Einrichtungen eine Separatorbahnbereitstelleinrichtung zum Bereitstellen einer Separatorbahn auf.

Vorzugsweise weisen die Positionier- und Laminiereinrichtung oder die Elektrodenstrangbereitstelleinrichtung oder jeweils beide dieser Einrichtungen eine Aufbring- und Fixiereinrichtung zum Aufbringen und Fixieren von relativ zueinander positioniert angelieferten Elektrodensegmente auf der Separatorbahn auf.

Vorzugsweise weisen das Transportsystem oder die Transportsysteme jeweils Transporteinheiten mit austauschbaren Warenträgern auf, um durch Austausch von Warenträgern das Transportsystem an unterschiedliche Elektrodensegmentformate anzupassen.

Vorzugsweise sind das Transportsystem oder die Transportsysteme jeweils dazu eingerichtet, das Elektrodensubstrat in der bahnförmigen und/oder der vereinzelten Form gezielt mittels Vakuums an den einzelnen Transporteinheiten zum Transportieren und Schneiden festzuhalten.

Vorzugsweise weisen das Transportsystem oder die Transportsysteme jeweils als Software ausgebildete Mittel zum Einstellen eines Abstands zwischen abgeschnittenen Elektrodensegmenten mittels Relativbewegung der Transporteinheiten, um die Elektrodensegmenterelativ zueinander zu positionieren, auf.

Die Schneideinrichtung ist vorzugsweise eingerichtet zum Schneiden auf einer ebenen Oberfläche. Die Schneideinrichtung ist vorzugsweise eingerichtet zum Schneiden entlang einer ebenen Schneidkontur zum Formen von Seitenrändern des Elektrodensegments. Die Schneideinrichtung ist vorzugsweise eingerichtet zum Schneiden mittels eines gelenkten Laserstrahls. Die Schneideinrichtung ist vorzugsweise eingerichtet zum Ausschneiden von Ableiterfahnen an wenigstens einem Seitenrand des Elektrodensegments. Die Schneideinrichtung ist vorzugsweise eingerichtet zum Durchführen eines zweidimensionalen Laserschnitts innerhalb der Schneidebene.

Vorzugsweise umfasst die Positionier- und Laminiereinrichtung, insbesondere deren Aufbring- und Fixiereinrichtung, eine Heizeinrichtung zum gezielten Erwärmen der Elektrodensegmente.

Vorzugsweise umfasst die Positionier- und Laminiereinrichtung, insbesondere deren Aufbring- und Fixiereinrichtung, eine Transporteinrichtung zum Transportieren und Abheben der relativ zueinander positionierten Elektrodensegmente von einer Anlieferungsebene zu einer Laminierstelle.

Vorzugsweise umfasst die Positionier- und Laminiereinrichtung, insbesondere deren Aufbring- und Fixiereinrichtung, eine Vakuum-Heizwalze oder temperierte Walze oder extern temperierte Vakuum-Walze.

Vorzugsweise umfasst die Positionier- und Laminiereinrichtung, insbesondere deren Aufbring- und Fixiereinrichtung, eine vorzugsweise unbeschichtete Laminierwalze. Bei einigen Ausführungsformen kann die Laminierwalze auch beschichtet sein.

Vorzugsweise umfasst die Positionier- und Laminiereinrichtung, insbesondere deren Aufbring- und Fixiereinrichtung, eine Presseinrichtung zum Ausüben einer Presskraft zum Laminieren, insbesondere zum Ausüben einer vorbestimmten Presskraft auf die Laminierwalze.

Bei einigen Ausführungsformen ist die Positionier- und Laminiereinrichtung dazu ausgebildet, ein zweites Elektrodensegment an mehreren Stellen wegzulassen, so dass in dem durch die Positionier- und Laminiereinrichtung gebildeten Verbundstrang an den mehreren Stellen jeweils ein Abschlusszellenbereich entsteht, der einen Schichtaufbau aus einem Längenabschnitt der ersten Separatorbahn, dem ersten Elektrodensegment und einem Längenabschnitt der zweiten Separatorbahn, jedoch kein zweites Elektrodensegment aufweist,

Bei einigen Ausführungsformen ist die Vereinzelungseinrichtung dazu ausgebildet, die Abschlusszellenbereiche von dem Verbundstrang zu vereinzeln, um Abschlusszellen zu erhalten, die einen Schichtaufbau aus Separator, erster Elektrode und Separator aufweist.

Vorzugsweise weist die Monozell-Herstellvorrichtung eine Steuerung auf, die dazu eingerichtet ist, die Monozell-Herstellvorrichtung zum Durchführen des Monozell-Herstellverfahrens nach einer der oben erläuterten Ausgestaltungen anzusteuern.

Gemäß einem weiteren Aspekt schafft die Erfindung eine Zellstapelherstellvorrichtung, umfassend eine Monozell-Herstellvorrichtung nach einer der voranstehenden Ausgestaltungen und eine Stapeleinrichtung zum Stapeln mehrerer durch die Monozell-Herstellvorrichtung hergestellter Monozellen zu einem Zellstapel.

Bei einigen Ausführungsformen ist die Stapeleinrichtung dazu ausgebildet, das Stapeln jedes Zellstapels mit einer Abschlusszelle zu beginnen oder zu beenden, so dass jeder Batteriezellstapel an jedem Ende mit einer ersten Elektrode und einem Separator abschließt.

Es ist bevorzugt, dass die Stapeleinrichtung mehrere Stapelplätze aufweist, die in einer Transportrichtung der Monozellen, oder auch gegebenenfalls der Abschlusszellen, hintereinander angeordnet sind.

Es ist bevorzugt, dass die Stapeleinrichtung eine Zellenerfassungs- und -zähleinrichtung zum Erfassen der Anzahl von Zellen an einem oder mehreren Stapelplätzen aufweist.

Vorzugsweise ist die Positionier- und Laminiereinrichtung ausgebildet zum flexiblen Erzeugen eines Leerabschnittes auf einen Steuerbefehl hin.

Vorzugsweise ist die Positionier- und Laminiereinrichtung ausgebildet zum Erzeugen von Leerabschnitten abhängig von einer Anzahl von Zellen in einem oder mehreren der durch die Stapeleinrichtung gebildeten Batteriezellstapeln.

Vorzugsweise ist die Positionier- und Laminiereinrichtung ausgebildet zum Erzeugen von Leerabschnitten abhängig von einem Füllgrad von Stapelplätzen der Stapeleinrichtung.

Es ist bevorzugt, dass die erste Elektrodenstrangbereitstelleinrichtung eine erste Elektrodenbahnliefereinrichtung zum Anliefern eines bahnförmigen ersten Elektrodensubstrats aufweist und die Positionier- und Laminiereinrichtung eine zweite Elektrodenbahnliefereinrichtung zum Anliefern eines bahnförmigen zweiten Elektrodensubstrats aufweist, wobei die Elektrodenstrangbereitstelleeinrichtung und Positionier- und Laminiereinrichtung derart gesteuert sind, dass das erste Elektrodensubstrat mit einer höheren Geschwindigkeit als das zweite Elektrodensubstrat angeliefert wird.

Die unterschiedlichen Geschwindigkeiten können unterschiedliche Materialanforderungen für das erste und zweite Elektrodensubstrat bei Erzeugung von Leerstellen ausgleichen.

Gemäß einem weiteren Aspekt schafft die Erfindung eine computerimplementierte Steuerung für eine Vorrichtung nach einer der voranstehenden Arten, dazu eingerichtet, die Vorrichtung zum Durchführen des Verfahrens nach einer der oben erläuterten Ausgestaltungen anzusteuern.

Bevorzugt ist die Steuerung mit Prozessor und Speicher versehen, in dem ein Computerprogramm mit entsprechenden Anweisungen gespeichert ist.

Gemäß einem weiteren Aspekt schafft die Erfindung ein Computerprogramm, umfassend Anweisungen, die eine Vorrichtung nach einer der voranstehenden Arten dazu veranlassen, das Verfahren nach einer der oben erläuterten Ausgestaltungen durchzuführen.

Es wird weiter auf folgende noch nicht veröffentlichte Literaturstellen Bezug genommen, die Teil der hiesigen Offenbarung sind:
[6] deutsche Patentanmeldung DE 10 2023 110 842.5
[7] europäische Patentanmeldung EP23184281.6
[8] deutsche Patentanmeldung DE10 2023 110 843.3
[9] europäische Patentanmeldung EP23184279.0
[10] deutsche Patentanmeldung DE10 2023 110 844.1
[11] europäische Patentanmeldung EP23184280.8

Einige Ausführungsformen der hier vorliegenden Erfindung sind Weiterentwicklungen von Ausführungsformen einer oder mehrerer der Literaturstellen [6] bis [11] und weisen neben erfindungsgemäßen Merkmalen oder Merkmalen bevorzugter Ausführungsformen der Erfindung ansonsten die zu der jeweiligen Ausführungsform der Literaturstelle beschriebenen Merkmale auf.

Vorteilhafte Ausgestaltungen der Erfindung betreffen Verfahren und Vorrichtungen zur Herstellung von Monozellen. Vorzugsweise sollen sie in der Stackassemblierung von Lithium-Ionen-Batteriezellen eingesetzt werden. Einige Ausführungsformen beziehen sich auf die Herstellung von Monozellen aus einem bereits vorproduzierten Halbzellstrang, einer einzelnen Elektrode und einem bahnförmigen Separator.

Bei bevorzugten Ausführungsformen der Erfindung ist keine Vorpositionierung der Elektroden auf einem Vakuumband notwendig. Das bei der Literaturstelle [3] vorliegende Problem, dass sich die zweiten Elektroden auf dem Weg zu einer Laminationsstelle auf dem Separator verlagern können, besteht nicht.

Bei einigen Ausführungsformen der Erfindung sind die Abstände zwischen den Elektroden variabel einstellbar, insbesondere zwischen zwei aufeinanderfolgenden Elektroden, ohne hierfür die Geschwindigkeit der Abwicklung hochdynamisch anpassen zu müssen.

Bei einigen Ausführungsformen ist das Weglassen einzelner Elektroden für ein SAS-Paket (Separator-Anode-Separator) oder auch ein SKS-Paket (Separator-Kathode- Separator) möglich.

Bevorzugte Ausgestaltungen der Erfindung unterscheiden sich in der Verfahrensreihenfolge von dem aus Literaturstelle [4] bekannten Verfahren. Bei den bevorzugten Ausgestaltungen wird zunächst ein Strang bestehend aus Separator und ersten Elektrodensegmenten gebildet, die in einem zweiten Schritt mit einem zweiten Separator und zweiten Elektrodensegmenten zu einer Monozelle zusammengeführt werden.

Bei besonders bevorzugten Ausgestaltungen der Erfindung handelt es sich um Weiterentwicklungen der in den Literaturstellen [6] bis [11] beschriebenen Verfahren, Vorrichtungen, Steuerungen und Computerprogrammen.

Ein Grundgedanke der in [6] bis [11] beschriebenen bisherigen Verfahren, Vorrichtungen, Steuerungen und Computerprogrammen zur Herstellung von Monozellen und Zellstapeln oder fertig ausgerichteter Batteriezellstacks lag in einer mechanisch exakten Führung der vereinzelten Elektroden.

Bei den in [6] bis [11] beschriebenen Lösungen ist zur exakten Führung der vereinzelten Elektroden eine Vakuumtrommel mit einzelnen Kassetten als zentrales Element vorgesehen. Die insbesondere als Elektrodensheets ausgebildeten ersten oder zweiten Elektrodensegmente werden dort von einem Laserschnitt bis zu einer Lamination dauerhaft festgehalten, um keinen Positionsverlust zu erleiden. Dabei wurden erste Elektrodensegmente auf einer ersten Separatorbahn laminiert, um einen ersten Halbzellenstrang zu erzeugen, und parallel wurden zweite Elektrodensegmente auf einer zweiten Separatorbahn laminiert, um einen zweiten Halbzellenstrang zu erzeugen. Anschließend wurden die beiden Halbstränge zusammenlaminiert.

Hierfür ist allerdings eine exakte Ausrichtung aller mechanischer Komponenten erforderlich. Die Abstände zwischen den einzelnen Elektroden dürfen nicht schwanken und diese müssen in beiden Halbzellensträngen identisch sein, ansonsten können beim Übereinanderlegen der beiden Halbzellbahnen keine exakten Monozellen gebildet werden. Die Lamination zu einer Monozelle weist konzeptbedingt die Schwierigkeit auf, dass keine Korrekturmöglichkeit besteht, um die einzelnen Halbzellen exakt übereinander zu legen. Das gesamte Konzept ist abhängig von einer exakten und vor allem gleichen Aufbringung der einzelnen Elektrodensheets auf die beiden einzelnen Separatorstränge.

Derzeit wird aus zwei Halbzellensträngen ein Monozellstrang erzeugt, nachfolgend sind einige technischen Merkmale des in [6] bis [11] beschriebenen Verfahrens diesbezüglich beschrieben:
- Die Variabilität des Stichmaßes zwischen den Elektroden sollte während des Betriebs gegeben sein, um Schwankungen in einzelnen Prozessen ausgleichen zu können
- Die Lamination sollte kontinuierlich erfolgen, ohne dass es zu Schwankungen in der Bahnspannung kommt
- Die Lamination findet zwischen zwei zylindrischen Walzen statt, die eine unterbrechungsfreie Oberfläche aufweisen (ausgenommen Vakuumbohrungen)
- Die Lamination von zwei Halbzellsträngen erfordert eine genaue Regelbarkeit der einzelnen Halbzellsträngen
- Als Erweiterungen der bisherigen Lösung kommen folgende Punkte hinzu:
   ∘ Es kann Inline ein SAS-Paket oder SKS-Paket, das als Decklage in der Batteriezelle notwendig ist, durch Weglassen einer Elektrode variabel erzeugt werden
   ∘ Die Formatflexibilität wird durch ein flexibles Transportsystem ermöglicht
   ∘ Die Verwendung einer "Opferfolie" im Laminationsprozess soll zusätzlich integrierbar sein

Bevorzugte Ausgestaltungen der Erfindung bieten die Vorteile dieser aus [6] bis [11] bekannten Lösungen, sind jedoch prozesstechnisch verbessert, insbesondere um deren Nachteile zu vermeiden oder zu verringern.

Einige Ausführungsformen der Erfindung entwickeln die Lösungen nach [6] bis [11] hinsichtlich einer verbesserten Herstellung der Monozelle weiter. In [6] bis [11] werden insbesondere bereits die Herstellung einer Halbzelle, ein Vereinzeln und Übergeben der Elektroden, sowie die Herstellung eines S-A-S-Pakets (oder alternativ eines S-K-S-Pakets) beschrieben.

Bevorzugte Ausgestaltungen der Erfindung weisen als wesentliches Merkmal bzw. als wesentlichen Unterschied zu dem Stand der Technik das Positionieren und direkte Laminieren der zweiten Elektrodensegmente samt zweiter Separatorbahn auf den ersten Elektrodenstrang oder mit anderen Worten das Positionieren und direkte Laminieren der zweiten Elektrode samt zweitem Separator auf die erste Halbzelle auf.

Im Folgenden werden einige Vorteile bevorzugter Ausführungsformen näher erläutert.

Bei Ausführungsformen der Erfindung entfällt einer der Laminationsprozesse (Herstellung zweite Halbzelle) mit positiven Einflüssen auf die Zellfunktion, aber auch Vorteile bzgl. Anlagenkosten und - footprint.

Bei Ausführungsformen der Erfindung werden Störeinflüsse in der Herstellung der Monozelle reduziert durch Minimierung der Bahnstrecken in der Zuführung bzw. durch direkte Herstellung (Positionieren & Laminieren) der Monozelle aus einem Halbzellstrang, einer Elektrode und einem Separator.

In Summe ist die gesamte Bahnlänge bei Verfahren gemäß Ausführungsformen der Erfindung - z.B. im Vergleich zu [6] bis [11] - deutlich geringer, da eine separate Bahn, bestehend aus der Halbzelle von zweiter Elektrode und zweitem Separator komplett entfällt.

Bei bisher bekannten Prozessen wird die zweite Elektrode erst in ihrer eigentlichen Position in der Monozelle, d.h. nach dem Auflegen auf dem Separator, erwärmt und anschließend laminiert (siehe [3] bis [5]). Hierfür muss die, noch nicht fest mit dem Separator verbundene Elektrode, dann im Verbund durch eine Heizstrecke geführt werden, so dass sie anschließend anlaminiert werden kann. Zudem ist es in Bezug zur Positionsgenauigkeit der einzelnen Lagen in der Monozelle von Nachteil, wenn der Separator in der langen Heizstrecke erwärmt wird, da er dadurch seine Materialeigenschaften ändert und somit u.a. die Bahnspannung negativ beeinflusst wird. In Summe hat dieser Effekt negative Auswirkungen auf die Regelung des Gesamtprozesses und die Positionsgenauigkeit der einzelnen Lagen in der Monozelle.

Besonders bevorzugte Ausgestaltungen der Erfindung sehen dagegen vor, dass die Elektroden bereits erwärmt werden, bevor Sie mit den anderen Komponenten zusammengeführt werden. Dadurch kann dann auch eine direkte Lamination erfolgen (siehe auch [6] und [7], hier sind beheizbare Trommeln bereits beschrieben). Somit muss das Vorwärmen der zweiten Elektrode nicht mehr in einer nachgelagerten Heizstrecke erfolgen. Folglich wird der Separator durch dieses Prinzip auch nicht vorerwärmt und somit werden die negativen Einflüsse auf den Prozess umgangen.

Des Weiteren wirkt sich bei der Herstellung der Monozelle durch zwei Halbzellstränge das Materialverhalten des Separators nachteilig aus (Elastizität bzw. unterschiedliches Verhalten bzgl. Dehnung und "Rückdehnung".

Besonders bevorzugte Ausgestaltungen der Erfindung weisen insbesondere einen oder mehrere der folgenden Vorteile auf:
Bei bisherigen Produktionsanlagen können folgende Problemstellungen auftreten, von denen eines oder mehrere durch vorteilhafte Ausgestaltungen der Erfindung verbessert werden:
- Ein Laserschnitt auf einer dreidimensionalen Oberfläche, die sich zudem bewegt, ist kompliziert einzurichten. Zudem entsteht hierbei aufgrund der Eigenschaften des Lasers eine größere Wärmeeinflusszone in dem zu trennenden Material. Bei bevorzugten Ausgestaltungen der Erfindung findet der Schnitt daher auf einer geraden Oberfläche statt.
- Die Lamination und der Schnitt der Elektroden erfolgen bei bevorzugten Ausgestaltungen voneinander unabhängig, da die Wärmeeintragung beim Schnitt zu Toleranzproblemen führen kann.
- Die Lamination erfolgt bei bisherigen Produktionsanlagen durch eine Walze mit einer elastischen Beschichtung und wird bei bevorzugten Ausgestaltungen der Erfindung auf "hart-hart" geändert. Durch den effektiveren Druckeintrag lässt sich die Laminationstemperatur reduzieren. Durch die Verwendung einer unbeschichteten Walze lassen sich zudem die mechanisch wirkenden Kräfte bei der Lamination verringern.
- Bei einer Veränderung des herzustellenden Batterieformats soll die Anlage ohne großen Aufwand umrüstbar sein.
- Die Materialzufuhr erfolgt günstigerweise von einer zentralen Stelle aus, kann jedoch auch zur Mitte hin verschoben werden. Ein zentrales Materiallager soll die Zuführung der Coils und Separatorrollen in den Trocken-Reinraum erleichtern und weitestgehend automatisieren.
- Der Separator besitzt meist einen gewissen Überstand über die Elektroden hinaus. Der Überstand, der durch einen sogenannten Gap zwischen den einzelnen Elektroden auf der Separatorbahn erzeugt wird, wird anstelle der üblichen, mechanischen Erstellung mit Hilfe einer Kulissenführung bei bevorzugten Ausgestaltungen durch eine einfachere und formatflexiblere Lösung ersetzt.
- Der Laserschnitt soll idealerweise auf "12 Uhr" erfolgen um eine Verschmutzung der Laser zu vermeiden. Ein Bereich zwischen "9:00 und 15:00 Uhr" ist angestrebt.

Bei besonders bevorzugten Ausgestaltungen der Erfindung wird ein Transportsystem mit unabhängig voneinander bewegbaren Transporteinheiten (wie z.B. ein Moversystem mit frei verfahrbaren Movern, wie es durch Beckhoff XTS, auf dem Markt erhältlich ist, oder ein Transportsystem von B&R Supertrack) genutzt, um eine Elektrodenbahn (nahezu endlos) perVakuum aufzunehmen und zur Vereinzelungsstelle zu transportieren. Nach der Vereinzelung der Elektrodenbahn in Teilstücke, wird durch die flexiblen Transporteinheiten der frei einstellbare Spalt (Gap) zwischen den einzelnen Elektrodenstücken erstellt. Die Vereinzelung findet hier auf einer ebenen Oberfläche statt. Für geänderte Produktgrößen werden bei bevorzugten Ausgestaltungen auf den Transporteinheiten andere Warenträger montiert, der Abstand kann z.B. über die Software oder mechanisch entsprechend angepasst werden.

Nach dem Laserschnitt folgt vorzugsweise eine positionsgenaue Übergabe der vereinzelten Elektroden auf eine Vakuum-Heizwalze; auch andere Walzen, wie z.B. temperiert oder fremd-temperiert, sind möglich.

Bei bevorzugten Ausführungsformen werden Stellen, an denen die Elektrodenbahnen zusammengefügt wurden, nicht übergeben, sondern können optional separat ausgeschleust werden. Die Elektroden werden für die Halbzellenlamination oder für die direkte Lamination auf dem ersten Elektrodenstrang auf dieser Walze erwärmt. D. h. die Elektroden werden nicht mehr während des Laserschnittes erwärmt, was zur Folge hat, das temperaturbedingte Längenausdehnungen keinen negativen Effekt mehr auf die Genauigkeit des Laserschnittes haben.

Die Lamination - der zweiten Elektroden auf dem ersten Elektrodenstrang und/oder der ersten Elektroden auf der ersten Separatorbahn zum Bilden der ersten Halbzelle - erfolgt gemäß bevorzugten Ausgestaltungen der Erfindung getrennt vom Laserschnitt nach dieser Übergabe in einem separaten Bereich zwischen der Transport-Walze, wie z.B. Vakuum- Heizwalze, und einer Laminationswalze. Die Lamination kann hier zwischen zwei harten Oberflächen erfolgen.

Bevorzugte Ausführungsformen der Erfindung bieten einen, mehrere oder alle der folgenden Vorteile:
- hohe Formatflexibilität
- "Hart-Hart"-Lamination bei der Halbzellenherstellung und/oder bei der direkten Lamination der zweiten Elektroden auf dem ersten Elektrodenstrang
- einfachere Gap-Steuerung zwischen den Elektroden
- Kein Wärmeeinfluss auf den Laserschnitt
- 2D-Laserschnitt mit einfacherer Kalibrierung bei der Inbetriebnahme oder Format-wechsel
- Einschleusung einer Halbzelle in den späteren Stapelprozess durch das Weglassen einer Elektrode nach dem Vereinzeln mittels des flexiblen Transportsystems beispielsweise ein SAS-Paket.

Ausführungsbeispiele werden im Folgenden anhand der beigefügten Zeichnungen näher erläutert. Darin zeigt:
Fig. 1 eine schematische Übersichtsdarstellung einer Ausführungsform einer Zellstapelherstellvorrichtung zum Herstellen eines Batteriezellstapels aus einem ersten Elektrodenstrang und darauf direkt positionierten zweiten Elektrodensegmenten samt zweiter Separatorbahn; und
Fig. 2 eine vergrößerte Darstellung des Details II von Fig. 1.

Im Folgenden werden unter Bezug auf die beigefügten Zeichnungen Verfahren und Vorrichtungen zum Herstellen von Monozellen aus einem ersten Elektrodenstrang und darauf direkt positionierten und anlaminierten zweiten Elektrodensegmenten samt zweiter Separatorbahn und zum Herstellen eines Batteriezellstapels aus derartigen Monozellen beschrieben.

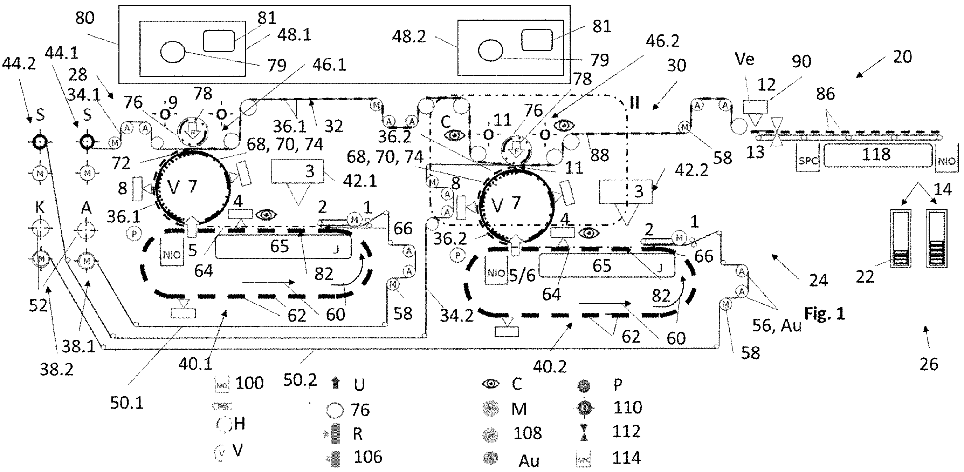

In Fig. 1 ist ein Ausführungsbeispiel für eine Zellstapelherstellvorrichtung 20 zum Herstellen eines Batteriezellstapels 22 dargestellt. Die Zellstapelherstellvorrich-tung 20 weist eine Monozell-Herstellvorrichtung 24 und eine Stapeleinrichtung 26 auf.

Die Monozell-Herstellvorrichtung 24 weist eine Elektrodenstrangbereitstelleinrichtung 28 und eine Positionier- und Laminiereinrichtung 30 auf.

Die Elektrodenstrangbereitstelleinrichtung 28 dient zum Bereitstellen eines Elektrodenstrangs 32, der eine erste Separatorbahn 34.1 und daran mit Abstand zueinander angebrachte erste Elektrodensegmente 36.1 aufweist. Der Elektrodenstrang 32 mit den ersten Elektrodensegmenten wird im Folgenden auch als erster Elektrodenstrang oder Halbzellenstrang bezeichnet.

Die Positionier- und Laminiereinrichtung 30 dient zum Positionieren und direkten Laminieren von zweiten Elektrodensegmenten 36.2 und einer zweiten Separatorbahn 34.2 an den ersten Elektrodenstrang 32.

Die Elektrodenstrangbereitstelleinrichtung 28 kann unterschiedlich aufgebaut sein, solange sie einen Elektrodenstrang 32 mit einer ersten Separatorbahn 34.1 und daran mit Abstand zueinander angebrachten und fixierten ersten Elektrodensegmenten 36.1 bereitstellt. Bei bevorzugten Ausgestaltungen, von denen ein Ausführungsbeispiel in den Zeichnungen dargestellt ist, ist der Aufbau der Elektrodenstrangbereitstelleinrichtung 28 und der Positionier- und Laminiereinrichtung 30 ist im Wesentlichen gleich und wird im Folgenden nur einmal am Beispiel der Positionier- und Laminiereinrichtung 30 beschrieben.

Bei der dargestellten Ausführungsform weisen die Positionier- und Laminiereinrichtung 30 und die Elektrodenstrangbereitstelleinrichtung 28 jeweils eine Elektrodensubstratbereitstelleinrichtung 38.1, 38.2, ein Transportsystem 40.1, 40.2, eine Schneideinrichtung 42.1, 42.2, eine Separatorbahnbereitstelleinrichtung 44.1, 44.2, eine Aufbring- und Fixiereinrichtung 46.1, 46.2 und eine Steuerung 48.1, 48.2 auf.

Die Elektrodensubstratbereitstelleinrichtung 38.1, 38.2 ist zum Bereitstellen eines bahnförmigen Elektrodensubstrats 50.1, 50.2 ausgebildet. Beispielsweise weist die Elektrodensubstratbereitstelleinrichtung 38.1, 38.2 einen Rollenhalter für eine Vorratsrolle 52 mit dem jeweiligen bahnförmigen Elektrodensubstrat 50.1, 50.2 sowie wenigstens einen Antriebsmotor 58, M auf, der zur Regelung der Bahnspannung eingerichtet ist. Weiter ist optional eine Messwalze 108 vorgesehen, über die das bahnförmige Elektrodensubstrat 50.1, 50.2 geleitet wird und die die Abrolllänge und/oder die Abrollgeschwindigkeit, mit der das bahnförmige Elektrodensubstrat 50.1, 50.2 abgerollt und bereitgestellt wird, erfasst und eine entsprechende Information der Steuerung 48.1, 48.2 zuleitet. Daten über die Lieferung des bahnförmigen Elektrodensubstrats 50.1, 50.2 können zusätzlich oder alternativ auch über die Stellung eines Tänzers (nicht dargestellt) ermittelt werden.

Außerdem weist die Elektrodensubstratbereitstelleinrichtung 38.1, 38.2 bei den dargestellten Ausführungsformen Ausrichtelemente 56, wie z.B. Rollen, und eventuell auch weitere Antriebe 58 zum Antreiben der Bewegung des bahnförmigen Elektrodensubstrats 50.1, 50.2 auf.

Das Transportsystem 40.1, 40.2 weist entlang einer umlaufenden Führungsbahn 60 einzeln bewegbare Transporteinheiten 62 auf. Die Bewegung der einzelnen Transporteinheiten 62 lässt sich einzeln durch die Steuerung 48.1, 48.2 steuern. Das Transportsystem 40.1, 40.2 ist dazu eingerichtet, das von der Elektrodensubstratbereitstelleinrichtung 38.1, 38.2 bereitgestellte bahnförmige Elektrodensubstrat 50.1, 50.2 aufzunehmen und eben entlang einer Schneidebene 64 zu bewegen.

Beispielsweise weist die Führungsbahn 60 anschließend an eine Aufnahmestelle 66 einen geradlinigen Bereich auf, so dass sich die Oberflächen von Werkstückträgern der Transporteinheiten 62, auf denen das Elektrodensubstrat 50.1, 50.2 aufliegt und beispielsweise mittels Vakuums oder Greifern (nicht dargestellt) daran fixiert wird, entlang der Schneidebene 64 bewegen. Mit 65 ist hierbei der Bereich der Elektrodenfixierung bezeichnet, wo das Elektroden-substrat 50.1, 50.2 und die daraus vereinzelten Elektrodensegmente an den Transporteinheiten 62 fixiert sind.

Bei einigen Ausführungsformen sind die auf den Transporteinheiten 62 angebrachten Werkstückträger in dem Bereich der Elektrodenfixierung 65 an eine Vakuumquelle (nicht dargestellt) angeschlossen, um die Elektrodensegmente 36.1, 36.2 in diesem Bereich an den Transporteinheiten 62 zu fixieren. Bei bevorzugten Ausführungsformen wird auf der jeweiligen Transporteinheit 62 eine Vakuumpumpe zur Vakuumerzeugung (nicht dargestellt) mitgeführt, die z.B. über die Steuerung 48.1, 48.2 individuell ansteuerbar ist. Bei weiteren Ausführungs-formen (nicht dargestellt) sind an den Transporteinheiten 62 einzeln ansteuerbare Greifer vorgesehen.

Demnach ist das Transportsystem 40.1, 40.2 bei den gezeigten Ausführungsformen dazu eingerichtet, das Elektrodensubstrat 50.1, 50.2 in der bahnförmigen und/oder der vereinzelten Form gezielt mittels Vakuums (oder auch alternativ mit anderen Mitteln, wie z.B. Greifern) an den einzelnen Transporteinheiten 62 zum Transportieren und Schneiden festzuhalten.

Bei einigen Ausführungsformen weist das Transportsystem 40.1, 40.2 Transporteinheiten 62 mit austauschbaren Warenträgern auf, um das Transportsystem 40.1, 40.2 durch Austausch von Warenträgern an unterschiedliche Elektrodensegmentformate anzupassen.

Wie oben erwähnt, ist die Bewegung der Transporteinheiten 62 einzeln steuerbar. Bei einigen Ausführungsformen weist das Transportsystem 40.1, 40.2 hierzu insbesondere in der Steuerung 48.1, 48.2 als Software implementierte Mittel zum Einstellen eines Abstands zwischen abgeschnittenen Elektrodensegmenten 36.1, 36.2 durch Relativbewegung der Transporteinheiten 62 auf, um die Elektrodensegmente 36.1, 36.2 relativ zueinander zu positionieren.

Die Schneideinrichtung 42.1, 42.2 ist zum Schneiden des Elektrodensubstrats 50.1, 50.2 entlang einer ein- oder zweidimensional in der Schneidebene 64 verlaufenden Schneidkontur ausgebildet, um die Elektrodensegmente 36.1, 36.2 von dem Elektrodensubstrat 50.1, 50.2 abzuschneiden. Beispielsweise weist die Schneideinrichtung 42.1, 42.2, wie dies grundsätzlich aus [1] bekannt ist, einen Schneidlaser mit entsprechenden Ablenkeinheiten auf, die durch die Steuerung 48.1, 48.2 angesteuert werden, um den Laserstrahl entlang der Schneidkontur zu lenken.

Die Schneideinrichtung 42.1, 42.2 ist zum Schneiden auf der ebenen Oberfläche eingerichtet. Die Schneidkontur der Schneideinrichtung 42.1, 42.2 ist zum Formen der Seitenränder des jeweiligen Elektrodensegments 36.1, 36.2 ausgebildet. Insbesondere können dabei auch Ableiterfahnen an wenigstens einem Seitenrand des Elektrodensegments 36.1, 36.2 beim Schneiden ausgebildet werden. Dies kann mittels Durchführens eines zweidimensionalen Laserschnitts innerhalb der Schneidebene 64 erfolgen.

Da die Schneidkontur in einer Ebene liegt, ist das Steuern des Schneidstrahls einschließlich Fokussierung wesentlich einfacher als bei einem Schneiden auf einer gekrümmten Schneidfläche. Alternativ können auch andere Schneidtechniken als Laser aufgrund des ebenen Verlaufs der Schneidkurve einfacher eingesetzt werden.

Die Separatorbahnbereitstelleinrichtung 44.1, 44.2 ist zum Bereitstellen der Separatorbahn 34.1, 34.2 eingerichtet. Analog zu der Elektrodensubstratbereitstelleinrichtung 38.1, 38.2 kann sie beispielsweise eine Vorratsrolle 52 mit der Separatorbahn 34.1, 34.2 und wenigstens einen Antrieb 58, der insbesondere zur Regelung der Bahnspannung eingerichtet ist und optional auch eine oder mehrere Messwalzen 108 oder sonstige Messaufnehmer, beispielsweise zur Erfassung der Position eines Tänzers, deren Signale ebenfalls an die Steuerung 48.1, 48.2 geleitet werden, aufweisen.

Die (erste) Aufbring- und Fixiereinrichtung 46.1 der Elektrodenstrangbereitstelleinrichtung 28 ist zum Aufbringen und Fixieren von mittels des ersten Transportsystems 40.1 relativ zueinander positioniert angelieferten ersten Elektrodensegmente 36.1 auf der ersten Separatorbahn 34.1, 34.2 ausgebildet, um so den ersten Elektrodenstrang 32 zu bilden.

Die (zweite) Aufbring- und Fixiereinrichtung 46.2 der Positionier- und Lamiereinrichtung 30 ist dazu eingerichtet und ausgebildet, die mittels des (zweiten) Transportsystems 40.2 der der Positionier- und Lamiereinrichtung 30 relativ zueinander positioniert angelieferten zweiten Elektrodensegmente 36.2 zusammen mit der zweiten Separatorbahn 34.2 auf dem ersten Elektrodenstrang 32 direkt aufzubringen und fixieren.

Bei einigen Ausführungsformen weist die Aufbring- und Fixiereinrichtung 46.1, 46.2 eine Heizeinrichtung 68 zum gezielten Erwärmen der Elektrodensegmente 36.1, 36.2 auf. Bei einigen Ausführungsformen weist die Aufbring- und Fixiereinrichtung 46.1, 46.2 eine Transporteinrichtung 70 zum Transportieren und Abheben der relativ zueinander positionierten Elektrodensegmente 36.1, 36.2 von den Transporteinheiten 62 zu einer Laminierstelle 72 auf.

Bei den dargestellten Ausführungsformen ist als Transporteinrichtung 70 mit Heizeinrichtung 68 eine Vakuum-Heizwalze 74 vorgesehen, deren Oberfläche durch eine integrierte Heizung gezielt beheizbar ist und mit Ansaugöffnungen versehen ist, um die Elektrodensegmente 36.1, 36.2 anzusaugen. Alternativ kann auch eine temperierte Walze oder eine extern temperierte Vakuum-Walze vorgesehen sein.

Bei einigen Ausführungsformen weist die Aufbring- und Fixiereinrichtung 46.1, 46.2 weiter eine vorzugsweise unbeschichtete Laminierwalze 76 auf, die mit der Presskraft F einer Presseinrichtung 78 auf die Transporteinrichtung 70, insbesondere die Vakuum-Heizwalze 74, gepresst wird, um bei der Positionier- und Laminiereinrichtung 30 die zweiten Elektrodensegmente 36.2 zusammen mit der zweiten Separatorbahn auf den durch die Elektrodenstrangbereitstelleinrichtung 28 bereitgestellte Elektrodenstrang 32 zu laminieren oder um bei der Elektrodenstrangbereitstelleinrichtung 32 die ersten Elektrodensegmente 36.1 auf die durch die erste Separatorbahnbereitstelleinrichtung 44.1 bereitgestellte erste Separatorbahn 34.1 zu laminieren.

Bei den dargestellten Ausführungsbeispiel ist die Laminierwalze 76 durch die Steuerung 48.1, 48.2 gesteuert angetrieben. Bei einigen Ausführungsformen werden dadurch auch die Bewegungen der Vakuum-Heizwalze 74 und der Separatorbahn 34.1, 34.2 angetrieben. Bei anderen Ausführungsformen ist die Vakuum-Heizwalze 74 durch die Steuerung 48.1, 48.2 gesteuert angetrieben. Es ist auch eine Laminierwalze 76 ohne eigenen Antrieb denkbar. Bei einigen Ausführungsformen ist vor der Laminierwalze 76 eine Zugeinheit mit Antrieb zur Erzeugung der Bahnspannung der Separatorbahn 34.1, 34.2 vorgesehen.

Die Steuerung 48.1, 48.2 ist dazu eingerichtet, die Monozellen-Herstellvorrichtung 24 zum Durchführen des im Folgenden erläuterten Monozellen-Herstellverfahrens anzusteuern.

Die Steuerung 48.1, 48.2 weist einen Prozessor 79 und einen Speicher 81 mit einem darin gespeicherten Computerprogramm auf, das die entsprechenden Anweisungen enthält, welche die Einheiten der Elektrodenstrangbereitstelleinrichtung 28 und der Positionier- und Laminiereinrichtung 30 veranlassen, dieses Monozellen-Herstellverfahren durchzuführen. Die jeweilige Steuerung 48.1, 48.2 der Elektrodenstrangbereitstelleinrichtung 28 und der Positionier- und Laminiereinrichtung 30 können als Teil einer Gesamtsteuerung 80 der Zellstapelherstellvorrichtung 20 vorgesehen sein.

Das Monozell-Herstellverfahren wird zum Herstellen von Monozellen 86 für eine Batterie durchgeführt. Die jeweils herzustellende Monozelle 86 weist jeweils ein Anodensegment (Beispiel für erstes Elektrodensegment 36.1), ein Kathodensegment (Beispiel für zweites Elektrodensegment 36.2) und eine Separatorschicht zwischen dem Anodensegment und dem Kathodensegment sowie wenigstens eine Separatorschicht an einer abgewandten Oberfläche des Anodensegments und/oder des Kathodensegments (Schichtaufbau SASK oder SKSA). Das Monozell-Herstellverfahren umfasst insbesondere die Schritte:
A) Bereitstellen eines Anodenstrangs als erster Elektrodenstrang 32 (Halbzellenstrang) mit der ersten Separatorbahn S, 34.1 und daran fixierten ersten Elektrodensegmenten 36.1,
B) von zweiten Elektrodensegmenten 36.2 in Form von Kathodensegmenten und einer zweiten Separatorbahn S, 34.2 auf dem ersten Elektrodenstrang 32, so dass die Anodensegmente und die Kathodensegmente zueinander ausgerichtet übereinanderliegen (und somit ein Verbundstrang 88 gebildet wird),
C) Abschneiden der Monozellen 86 von dem in Schritt B) erhaltenen Verbundstrang 88.

Bei den dargestellten Ausgestaltungen der Monozell-Herstellvorrichtung 24 dient die Elektrodenstrangbereitstellvorrichtung 28 demnach zum Bereitstellen eines mit Anodensegmenten als erste Elektrodensegmente 36.1 versehenen Anodenstrangs, und die Positionier- und Laminiereinrichtung 30 dient Positionieren, Aufbringen und direkten Laminieren von Kathodensegmenten als zweite Elektrodensegmente 36.2 auf den Anodenstrang. Die Positionier- und Laminiereinrichtung 30 ist dazu eingerichtet, den Verbundstrang 88 aus dem Anodenstrang und den daran positioniert laminierten Kathodensegmenten und der zweiten Separatorbahn S, 34.2 mit zueinander ausgerichtet übereinander liegenden Anoden- und Kathodensegmenten zu bilden. Weiter ist eine Vereinzelungseinrichtung 90 zum Vereinzeln von Monozellen 86 durch Abschneiden von dem Verbundstrang 88 vorgesehen.

Das Bereitstellen des ersten Elektrodenstrangs 32.1 - hier z.B. des Anodenstrangs - gemäß Schritt A) wird bei der gezeigten bevorzugten Ausgestaltung mit folgenden Schritten durchgeführt:
a) Bereitstellen des bahnförmigen ersten Elektrodensubstrats 50.1, hier in Form eines bahnförmigen Anodensubstrats;
b) Aufnehmen des bahnförmigen ersten Elektrodensubstrats 50.1 mittels des ersten Transportsystems 40.1 der Elektrodenstrangbereitstelleinrichtung 28, wobei das erste Transportsystem 40.1 die entlang der Führungsbahn 60 einzeln bewegbaren Transporteinheiten 62 aufweist, und ebenes Bewegen des ersten Elektrodensubstrats 50.1 entlang der Schneidebene 64;
c) Schneiden des bahnförmigen ersten Elektrodensubstrats 50.1 in der Schneidebene, um erste Elektrodensegmente 36.1 in Form von Anodensegmenten abzuschneiden, die jeweils einzeln auf einer der Transporteinheiten 62 angeordnet sind;
d) Einstellen eines Abstands zwischen abgeschnittenen Anodensegmenten mittels Relativbewegung der Transporteinheiten 62, um die Anodensegmente 36.1 relativ zueinander zu positionieren;
e) Bereitstellen der ersten Separatorbahn 34.1; und
f) Aufbringen und Fixieren der relativ zueinander positionierten Anodensegmente 36.1 auf der ersten Separatorbahn 34.1.

Im Bereich der Anodenlamination werden somit die Elektroden 36.1 in definiertem Abstand an den Separator 34.1 anlaminiert. Hierfür ist eine Laminationswalze - Laminierwalze 76 - verbaut, die beispielsweise mittels einer Presseinrichtung 78, den notwendigen Gegendruck aufbringt. Die Laminierwalze 76 kann beheizt werden. An dieser Position kann optional ein Opferfolie genannter Liner mit laminiert werden, um das Anhaften des ersten Separators 34.1 an der Laminierwalze 76 zu verhindern. Dieser Liner wird nach der Lamination wieder aufgewickelt.

Schritt f) wird bei einigen Ausführungsformen demnach mit wenigstens einem oder mehreren der folgenden Unterschritte durchgeführt:
f1) Positionsgenaues Übergeben der vereinzelten ersten Elektrodensegmente 36.1 auf die Transporteinrichtung 70 mit Heizeinrichtung 68, insbesondere die Vakuum-Heizwalze 74;
f2) gezieltes Erwärmen des ersten Elektrodensegments 36.1 - Anodensegments - zum Laminieren;
f3) Anheben der ersten Elektrodensegmente 36.1 auf eine sich oberhalb der Schneidebene 64 befindliche Fixierstelle - Laminierstelle 72 - und somit außerhalb des Bereichs, der durch Schneidpartikel verschmutzt werden könnte;
f4) Laminieren der ersten Separatorbahn 34.1 und der ersten Elektrodensegmente 36.1 zwischen zwei Walzen 74, 76;
f5) Laminieren der ersten Separatorbahn 34.1 und den ersten Elektrodensegmenten 36.1 zwischen unbeschichteten Hartmetallflächen und/oder zwischen zwei harten Oberflächen (z.B. an den Walzen 74, 76);
f6) Reinigen einer von der Transporteinheit 62 abgehobenen Seite des ersten Elektrodensegments 36.1;
f7) Aufpressen der ersten Separatorbahn 34.1 mittels der Laminationswalze 76 auf die Vakuum-Heizwalze 74 oder temperierte Walze oder extern temperierte Vakuumwalze, die die Elektrodensegmente 36.1, 36.2 transportiert.

Der so gebildete Anodenhalbzellenstrang - Elektrodenstrang 32 - wird bis zur Kathodenlamination transportiert. In geeignetem Abstand zu einer zweiten Laminationsstelle 11 sitzt ein Sensor C, der die Position der ersten Elektroden - Anodensegmente - auf dem ersten Separator 34.1 vermessen kann (Stichmaß zwischen zwei benachbarten Elektroden). Dieser Sensor C dient zur Regelung der positionsgenauen Übergabe der Kathoden auf eine Vakuumtrommel - Beispiel für Transporteinrichtung 70 -, um passend übereinanderliegende Monozellen herstellen zu können.

Im Bereich der zweiten Laminationsstelle 11 werden der Anodenhalbzellenstrang, ein zweiter Separator 34.2, ein Elektrodensheet - Beispiel für zweites Elektrodensegment 36.2, hier insbesondere Kathodensheet - sowie optional Liner/ Opferfolie zugeführt (statt wie im zuvor durchgeführten Verfahren entweder zuerst zwei Halbzellen zu bilden und anschließend daraus die Monozelle oder aus zwei Separatoren und einer Elektrode mit anschließendem Auflegen der zweiten Elektrode und Laminieren die Monozelle zu bilden). Hier wird positionsgenau ein Monozellstrang hergestellt. Die Opferfolie wird anschließend wieder aufgewickelt.

Schritt B) wird bei einigen Ausführungsformen mit wenigstens einem oder mehreren der folgenden Unterschritte durchgeführt:
B1) Positionsgenaues Übergeben einzelner Kathodensegmente auf die Transporteinrichtung 70 mit Heizeinrichtung 68, insbesondere die Vakuum-Heizwalze 74;
B2) gezieltes Erwärmen des als Kathodensegment ausgebildeten zweiten Elektrodensegments 36.2 zum Laminieren;
B3) Anheben der als Kathodensegmente ausgebildeten zweiten Elektrodensegmente 36.2 auf eine sich oberhalb der Schneidebene 64, in der die zweiten Elektrodensegmente 36.2 vereinzelt werden, befindliche Fixierstelle -zweite Laminierstelle 11 - und somit außerhalb des Bereichs, der durch Schneidpartikel verschmutzt werden könnte;
B4) Laminieren des ersten Elektrodenstrangs 28 und des zweiten Elektrodensegments 36.2 zwischen zwei Walzen 74, 76, gegebenenfalls zusammen mit der zweiten Separatorbahn 34.2;
B5) Laminieren des ersten Elektrodenstrangs 28 und des zweiten Elektrodensegments 36.2, gegebenenfalls zusammen mit der zweiten Separatorbahn 34.2, zwischen unbeschichteten Hartmetallflächen und/oder zwischen zwei harten Oberflächen;
B6) Reinigen einer von der Transporteinheit 70 zum Anliefern des zweiten Elektrodensegments 36.2 abgehobenen Seite des zweiten Elektrodensegments 36.2;
B7) Aufpressen des ersten Elektrodenstrangs 28 mittels einer Laminierwalze 76 auf eine Vakuum-Heizwalze 74 oder temperierte Walze oder extern temperierte Vakuumwalze, die die zweiten Elektrodensegmente 36.2 transportiert.

Außerdem wird Schritt B) bei einigen Ausführungsformen zum positionsgenauern Bereitstellen der vereinzelten Kathodensegmente mit wenigstens einem oder mehreren der folgenden Unterschritte durchgeführt:
i) Bereitstellen eines bahnförmigen zweiten Elektrodensubstrats 50.2 - in Form eines Kathodensubstrats -, um davon zweite Elektrodensegmente 36.2 in Form von Kathoden zu vereinzeln (analog zu Schritt a));
ii) Aufnehmen des bahnförmigen zweiten Elektrodensubstrats 50.2 - Kathodensubstrat - oder Aufnehmen von zweiten Elektrodensegmenten 36.2 - Kathodensegmenten - mittels des Transportsystems 40.2, das entlang der Führungsbahn 60 einzeln bewegbare Transporteinheiten 62 aufweist;
iii) ebenes Bewegen des zweiten Elektrodensubstrats 50.2 entlang der Schneidebene 64 und Schneiden des bahnförmigen zweiten Elektrodensubstrats 50.2 in der Schneidebene 64, um zweite Elektrodensegmente 36.2 abzuschneiden, insbesondere derart, dass diese jeweils einzeln auf einer der Transporteinheiten 62 des Transportsystems 40.2 angeordnet sind (wie in Schritt c));
iv) Einstellen eines Abstands zwischen abgeschnittenen zweiten Elektrodensegmenten 36.2 mittels Relativbewegung von Transporteinheiten 62 des Transportsystems 40.2, um die zweiten Elektrodensegmente 36.2 relativ zueinander zu positionieren (analoge zu Schritt d));
v) Aufbringen und Fixieren der relativ zueinander positionierten zweiten Elektrodensegmente 36.2 auf dem ersten Elektrodenstrang 32 (analog zu Schritt f);
vi) Bereitstellen der zweiten Separatorbahn 34.2 und
   vi.1) Aufbringen und Fixieren der zweiten Separatorbahn 34.2 zusammen mit den zweiten Elektrodensegmenten 36.2 auf dem ersten Elektrodenstrang 32 oder vi.2) Aufbringen und Fixieren der zweiten Separatorbahn 34.2 auf dem ersten Elektrodenstrang 32, an dem die zweiten Elektrodensegmente 36.2 aufgebracht und fixiert sind.

Bei den gezeigten Ausführungsbeispielen werden die Schritte b) sowie ii) derart durchgeführt, dass das jeweilige bahnförmige Elektrodensubstrat 50.1, 50.2 an der Aufnahmestelle 66 auf den jeweils daran vorbeifahrenden Transporteinheiten 62 angesaugt wird und dann mittels der Transporteinheiten 62 zu einer Vereinzelungsstelle - bei Bezugszeichen 3 - transportiert wird, wo durch die ebene Bewegung der Transporteinheiten 62 auf den Transporteinheiten 62 eine ebene Oberfläche zum Schneiden als Schneidebene 64 bereitgestellt wird.

Wie oben bereits erwähnt werden die Transporteinheiten 62 mit austauschbaren Warenträgern bereitgestellt. Zum Einrichten der Zellstapelherstellvorrichtung 20 für ein bestimmtes Format der Elektroden - Anoden und/oder Kathoden - werden die Warenträger entsprechend des herzustellenden Elektrodenformats aus einem Sortiment unterschiedlicher Warenträger ausgewählt.

Bei der in Fig. 1 dargestellten Ausführungsform wird jeweils eine horizontale Schneidebene 64 bereitgestellt; und das Elektrodensubstrat 50.1, 50.2 wird horizontal entlang der Schneidebene bewegt. Weiteren nicht näher dargestellten Ausführungsformen wird eine im Wesentlichen vertikale Schneidebene bereitgestellt, und das Elektrodensubstrat 50.1, 50.2 wird entlang dieser vertikalen Schneidebene vertikal bewegt. Selbstverständlich sind auch Mischformen - eines der Transportsysteme 40.1, 40.2 transportiert das Elektrodensubstrat horizontal, das andere vertikal - oder auch schräge Schneidebenen möglich.

Das Schneiden erfolgt bei den dargestellten Ausführungsformen auf einer ebenen Oberfläche auf den Warenträgern. Das Schneiden erfolgt entlang einer ebenen Schneidkontur, die zumindest zum Formen von Seitenrändern der Elektrodensegmente 36.1, 36.2 oder auch zum Formen von Ableiterfahnen oder dergleichen ausgebildet ist. Das Schneiden erfolgt insbesondere mittels wenigstens eines gelenkten Laserstrahls der entlang der Schneidkontur verfahren wird, wenngleich selbstverständlich auch andere Schneidtechniken (z.B. mit Messern, Stanzen) möglich sind. Somit wird vorzugsweise ein zweidimensionaler Laserschnitt in der Schneidebene 60 durchgeführt. Vorzugsweise wird das jeweilige Elektrodensegment 36.1, 36.2 nach dem Schneiden gereinigt.

Der Abstand zwischen den geschnittenen Elektrodensegmenten wird vorzugsweise der Abstand zwischen den Transporteinheiten 62 nach dem Schneiden mittels der Steuerungssoftware eingestellt. Hierzu wird insbesondere diejenige Transporteinheit 62, die ein soeben abgeschnittenes Elektrodensegment trägt, von der Vereinzelungsstelle 82 wegbewegt und mit passendem Abstand zu der Aufbring- und Fixiereinrichtung 46.1, 46.2 bewegt, wo der Schritt f) bzw. der Schritt v) durchgeführt wird. Bei einigen Ausführungsformen kann - z.B. durch Zurückhalten der Transporteinheiten 62 - bei Bedarf ein Elektrodensegment 36.1, 36.2 an einer ansonsten mit Elektrodensegment zu besetzenden Stelle auf dem Separator ausgelassen werden, um im Prozess der Herstellung von Monozellen die Herstellung einer Halbzelle wie insbesondere ein SAS- oder SKS-Paket zu ermöglichen. Bei einigen Ausführungsformen erfolgt weiter ein Reinigen des abgeschnittenen Elektrodensegments und/oder der Transporteinheit.

Bei der Zellstapelherstellvorrichtung ist zusätzlich zu dieser Monozell-Herstellvorrichtung 24 die Stapeleinrichtung 26 vorgesehen, die zum Stapeln mehrerer durch die Monozell-Herstellvorrichtung 24 hergestellter Monozellen zu einem Zellstapel ausgebildet ist.

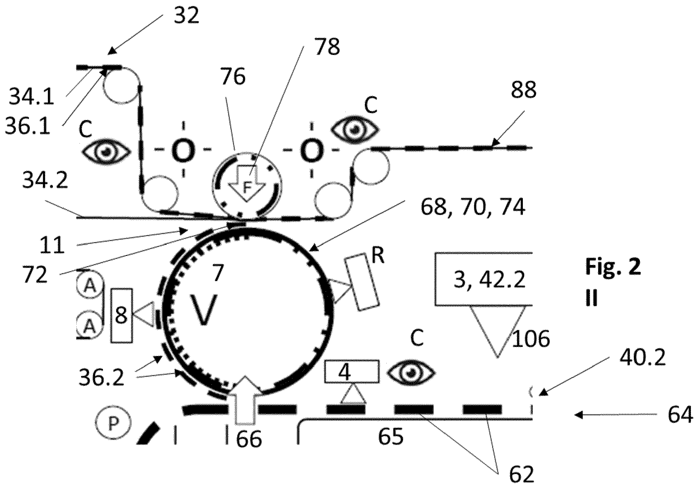

Konkrete bevorzugte Ausgestaltungen des Zellstapelherstellverfahrens ergeben sich aus den Fig. 1 und 2. Folgende Prozessschritte sind gezeigt:
- 1: Zuführung von Elektroden und Separatoren als Bahnmaterial in den Schneide- und Laminierungsprozess
- 2: Aufziehen der Bahn auf ein Transportsystem mit flexibel beweglichen Trägern für die vereinzelten Elektroden
- 3: Vereinzeln der Elektrodenbahnen sowohl für die Anode als auch für die Kathode
- 4: Optionale Reinigung der Elektroden
- 5: Übergabe der Elektroden auf die Vakuumwalze
- 6: Optional kann bei Bedarf eine Elektrode ausgelassen werden für die Bereitstellung einer Halbzelle beispielsweise eines SAS-Paketes
- 7: Erwärmen der Elektroden
- 8: Optionale Reinigung der Elektroden
- 9: Laminierung der Halbzellen zu zwei Halbzellensträngen
- 10: Zusammenführung der Halbzellenstränge
- 11: Laminierung der beiden Halbzellenstränge zu einem Monozellenstrang
- 12: Vereinzeln der Monozellen
- 13: Übergabe der Monozellen an ein Transportband zur weiteren Verarbeitung
- 14: Stapeln der Monozellen zu einem Batteriezellstapel

Die in den Zeichnungen verwendeten Symbole bedeuten:
- 100: NiO-Behälter (NiO= nicht in Ordnung)
- 106: Laserschnitt
- 108: Messwalze
- 110: Ab- /Aufrollen Opferfolie
- 112: HiPot-Test
- 114: Prüfteilentnahme
- 118: Stapelbildung
- U: Übergabe Lamination
- R: Reinigung
- Ve: Vereinzelung
- C: Kontrolle
- M: Antrieb
- Au: Ausrichten
- P: (Papierwickler/Mülleimer Autosplice)
- H: Heizung
- V: Vakuum
- S: Separator
- K: Kathode(nsubstrat)
- A: Anode(nsubstrat)

Bei 6 wird für die Bereitstellung eines SAS-Paketes (Beispiel für eine Abschlusszelle 100) in dem Verbundstrang 88 eine Lücke generiert, in dem ein Kathodensegment bei der Übergabe auf die Vakuum-Heizwalze 74 der Positionier- und Laminiereinrichtung 30 ausgelassen wird. Die dabei entstehende Lücke im Verbundstrang kann für die Bereitstellung einer Halbzelle im SAS-Format (Anode eingeschlossen in 2 Separatoren) genutzt werden. Die Ausnutzung der normal möglichen Anlagengeschwindigkeit bleibt möglich, indem hierfür das flexible Transportsystem 40.2 eingesetzt wird, in dem der Platz unter der optionalen Elektrodenreinigung 4 als Puffer für Transporteinheiten 62 mit sich darauf befindenden Kathodenbahnstücken genutzt wird. Soll ein SAS-Paket erzeugt werden, so wird die Transporteinheit 62 zurückgehalten und keine Kathode an den ersten Elektrodenstrang 32 laminiert, wodurch ein SAS-Paket durch die Lamination aus dem zweiten Separator und dem ersten Separator mit anhaftender Anode entsteht. Hierfür liegt die Bahngeschwindigkeit der noch ungetrennten Kathodenbahn dauerhaft niedriger als die Bahngeschwindigkeit der ungetrennten Anodenbahn um den Puffer nicht zu überfüllen.

### Bezugszeichenliste:

- 1: Zuführung von Elektroden und Separatoren als Bahnmaterial in den Schneide- und Laminierungsprozess
- 2: Aufziehen der Bahn auf ein Transportsystem mit flexibel beweglichen Trägern für die vereinzelten Elektroden
- 3: Vereinzeln der Elektrodenbahnen sowohl für die Anode als auch für die Kathode
- 4: Optionale Reinigung der Elektroden
- 5: Übergabe der Elektroden auf die Vakuumwalze
- 6: Optional kann bei Bedarf eine Elektrode ausgelassen werden für die Bereitstellung einer Halbzelle beispielsweiße eines SAS-Paketes
- 7: Erwärmen der Elektroden
- 8: Optionale Reinigung der Elektroden
- 9: Laminierung der Halbzellen zu einem ersten Halbzellenstrang
- 11: Laminierung zweiter Elektroden und gegebenenfalls einer zweiten Separatorbahn auf dem ersten Halbzellenstrang zum Bilden eins Monozellenstrangs
- 12: Vereinzeln der Monozellen
- 13: Übergabe der Monozellen an ein Transportband zur weiteren Verarbeitung
- 14: Stapeln der Monozellen zu einem Batteriezellstapel
- 20: Zellstapelherstellvorrichtung
- 22: Batteriezellstapel
- 24: Monozell-Herstellvorrichtung
- 26: Stapeleinrichtung
- 28: Elektrodenstrangbereitstellvorrichtung
- 30: Positionier- und Laminiereinrichtung
- 32: erster Elektrodenstrang (=erster Halbzellenstrang)
- 34.1: erste Separatorbahn
- 34.2: zweite Separatorbahn
- 36.1: erstes Elektrodensegment
- 36.2: zweites Elektrodensegment
- 38.1: erste Elektrodensubstratbereitstelleinrichtung
- 38.2: zweite Elektrodensubstratbereitstelleinrichtung
- 40.1: erstes Transportsystem
- 40.2: zweites Transportsystem
- 42.1: erste Schneideinrichtung
- 42.2: zweite Schneideinrichtung
- 44.1: erste Separatorbahnbereitstelleinrichtung
- 44.2: zweite Separatorbahnbereitstelleinrichtung
- 46.1: erste Aufbring- und Fixiereinrichtung
- 46.2: zweite Aufbring- und Fixiereinrichtung
- 48.1: erste Steuerung
- 48.2: zweite Steuerung
- 50.1: erstes bahnförmiges Elektrodensubstrat
- 50.2: erstes bahnförmiges Elektrodensubstrat
- 52: Vorratsrolle
- 56: Ausrichtelement
- 58: Antrieb
- 60: Führungsbahn
- 62: Transporteinheit
- 64: Schneidebene
- 65: Elektrodenfixierung
- 66: Aufnahmestelle
- 68: Heizeinrichtung
- 70: Transporteinrichtung
- 72: Laminierstelle
- 74: Vakuum-Heizwalze
- 76: Laminierwalze (Laminationstrommel)
- 78: Presseinrichtung
- 79: Prozessor
- 80: Gesamtsteuerung
- 81: Speicher
- 82: Vereinzelungsstelle
- 86: Monozelle
- 88: Verbundstrang (Monozellen-Strang)
- 90: Vereinzelungseinrichtung
- 100: NiO-Behälter (NiO= nicht in Ordnung)
- 106: Laserschnitt
- 108: Messwalze
- 110: Ab- / Aufrollen Opferfolie
- 112: HiPot-Test
- 114: Prüfteilentnahme
- 118: Stapelbildung
- U: Übergabe Lamination
- R: Reinigung
- Ve: Vereinzelung
- C: Kontrolle
- M: Antrieb
- Au: Ausrichten
- P: Ausschleusung Elektrode
- H: Heizung
- V: Vakuum
- S: Separator
- K: Kathodensubstrat
- A: Anodensubstrat

## Patentansprüche

1. Monozell-Herstellverfahren zum Herstellen von Monozellen (86) für eine Batterie, wobei die Monozelle (86) jeweils ein erstes Elektrodensegment (36.1), ein zweites Elektrodensegment (36.2) und eine Separatorschicht zwischen dem ersten Elektrodensegment (36.1) und dem zweiten Elektrodensegment (36.2) sowie wenigstens eine Separatorschicht an einer abgewandten Oberfläche des ersten und/oder zweiten Elektrodensegments (36.1, 36.2) aufweist, wobei das Monozell-Herstellverfahren die Schritte umfasst:
A) Bereitstellen eines ersten Elektrodenstrangs (32) mit einer ersten Separatorbahn (34.1) und daran mit Abstand zueinander angebrachten und fixierten ersten Elektrodensegmenten (36.1);
B) Positionieren und direktes Laminieren von zweiten Elektrodensegmenten (36.2) und einer zweiten Separatorbahn (34.2) auf dem ersten Elektrodenstrang, (28) so dass die ersten und die zweiten Elektrodensegmente (36.1, 36.2) zueinander ausgerichtet übereinanderliegen,
C) Abschneiden der Monozellen (86) von dem in Schritt B) erhaltenen Verbundstrang (88).

2. Monozell-Herstellverfahren nach Anspruch 1, **dadurch gekennzeichnet,**
**dass** Schritt B) wenigstens einen oder mehrere der Schritte umfasst:
B1) Positionsgenaues Übergeben einzelner zweiter Elektrodensegmente (36.2) auf eine Transporteinrichtung (70) mit Heizeinrichtung (68), insbesondere eine Vakuum-Heizwalze (74);
B2) gezieltes Erwärmen des zweiten Elektrodensegments (36.2);
B3) Anheben der zweiten Elektrodensegmente (36.2) auf eine sich oberhalb einer Schneidebene (64), in der die zweiten Elektrodensegmente (36.2) vereinzelt werden, befindliche Fixierstelle;
B4) Laminieren des ersten Elektrodenstrangs (28) und des zweiten Elektrodensegments (36.2) zwischen zwei Walzen (74, 76), gegebenenfalls zusammen mit der zweiten Separatorbahn (34.2);
B5) Laminieren des ersten Elektrodenstrangs (28) und des zweiten Elektrodensegments (36.2), gegebenenfalls zusammen mit der zweiten Separatorbahn (34.2), zwischen unbeschichteten Hartmetallflächen und/oder zwischen zwei harten Oberflächen;
B6) Reinigen einer von einer Transporteinheit (62) zum Anliefern des zweiten Elektrodensegments (36.2) abgehobenen Seite des zweiten Elektrodensegments (36.2);
B7) Aufpressen des ersten Elektrodenstrangs (28) mittels einer Laminierwalze (76) auf eine Vakuum-Heizwalze (74) oder temperierte Walze oder extern temperierte Vakuumwalze, die die zweiten Elektrodensegmente (36.2) transportiert.

3. Monozell-Herstellverfahren nach einem der voranstehenden Ansprüche, **dadurch gekennzeichnet,**
**dass** Schritt B) wenigstens einen oder mehrere der Schritte umfasst:
i) Bereitstellen eines bahnförmigen zweiten Elektrodensubstrats (50.2), um davon zweite Elektrodensegmente (36.2) zu vereinzeln;
ii) Aufnehmen eines bahnförmigen zweiten Elektrodensubstrats (50.2) oder Aufnehmen von zweiten Elektrodensegmenten (36.2) mittels eines Transportsystems (40.2), das entlang einer Führungsbahn (60) einzeln bewegbare Transporteinheiten (62) aufweist;
iii) ebenes Bewegen eines zweiten Elektrodensubstrats (50.2) entlang einer Schneidebene (64) und Schneiden des bahnförmigen zweiten Elektrodensubstrats (50.2) in der Schneidebene (64), um zweite Elektrodensegmente (36.2) abzuschneiden, insbesondere derart, dass diese jeweils einzeln auf einer der Transporteinheiten (62) eines Transportsystems (40.2) angeordnet sind;
iv) Einstellen eines Abstands zwischen zweiten Elektrodensegmenten (36.2) mittels Relativbewegung von Transporteinheiten (62) eines Transportsystems (40.2), um die zweiten Elektrodensegmente (36.2) relativ zueinander zu positionieren;
v) Aufbringen und Fixieren der relativ zueinander positionierten zweiten Elektrodensegmente (36.2) auf dem ersten Elektrodenstrang (32);
vi) Bereitstellen der zweiten Separatorbahn (34.2) und
vi.1) Aufbringen und Fixieren der zweiten Separatorbahn (34.2) zusammen mit den zweiten Elektrodensegmenten (36.2) auf dem ersten Elektrodenstrang (32) oder vi.2) Aufbringen und Fixieren der zweiten Separatorbahn (34.2) auf dem ersten Elektrodenstrang (32), an dem die zweiten Elektrodensegmente (36.2) aufgebracht und fixiert sind.

4. Monozell-Herstellverfahren nach Anspruch 3, **dadurch gekennzeichnet,**
**dass** Schritt ii) wenigstens einen oder mehrere der Schritte umfasst:
ii.1) Ansaugen des bahnförmigen zweiten Elektrodensubstrats (50.2) oder bereits vereinzelter zweiter Elektrodensegmente (36.2) an einer Aufnahmestelle (66) auf den Transporteinheiten (62);
ii.2) Transportieren des bahnförmigen zweiten Elektrodensubstrats (50.2) mittels der Transporteinheiten (62) zu einer Vereinzelungsstelle (82), wo eine ebene Oberfläche zum Schneiden als Schneidebene (64) bereitgestellt wird;
ii.3) Bereitstellen von Transporteinheiten (62) mit austauschbaren Warenträgern, wobei die Warenträger entsprechend des Elektrodenformats der zweiten Elektrodensegmente (36.2) aus einem Sortiment unterschiedlicher Warenträger ausgewählt werden.

5. Monozell-Herstellverfahren nach einem der Ansprüche 3 oder 4, **dadurch gekennzeichnet, dass** Schritt iii) wenigstens einen oder mehrere der Schritte umfasst:
iii.1) Bereitstellen einer horizontalen Schneidebene (64) und horizontales Bewegen entlang der Schneidebene (64);
iii.2) Bereitstellen einer im Wesentlichen vertikalen Schneidebene und Bewegen entlang dieser Schneidebene;
iii.4) Schneiden auf einer ebenen Oberfläche;
iii.5) Schneiden entlang einer ebenen Schneidkontur zum Formen von Seitenrändern des zweiten Elektrodensegments (36.2);
iii.6) Schneiden mittels eines gelenkten Laserstrahls;
iii.7) Ausschneiden von Ableiterfahnen an wenigstens einem Seitenrand des zweiten Elektrodensegments (36.2);
iii.8) Durchführen eines zweidimensionalen Laserschnitts innerhalb der Schneidebene (64);
iii.9) Reinigen des zweiten Elektrodensegments (36.2) nach dem Schneiden.

6. Monozell-Herstellverfahren nach einem der Ansprüche 3 bis 5, **dadurch gekennzeichnet,**
**dass** Schritt iv) wenigstens einen oder mehrere der Schritte umfasst:
iv.1) Anpassen des Abstands mittels einer Steuerungssoftware;
iv.2) Wegbewegen einer Transporteinheit (62), die ein soeben abgeschnittenes zweites Elektrodensegment (36.2) trägt, von einer Schneid- oder Vereinzelungsstelle (82);
iv.3) Weitertransportieren des zweiten Elektrodensegments (36.2) zu einer Einrichtung (46.2) zum Durchführen von Schritt v);
iv.4) Auslassen eines zweiten Elektrodensegments (36.2) an einer ansonsten mit zweitem Elektrodensegment zu besetzenden Stelle des Elektrodenstrangs (28), um im Prozess der Herstellung von Monozellen (88) die Herstellung einer Halbzelle wie insbesondere ein SAS- oder SKS-Paket zu ermöglichen;
iv.5) Reinigen des abgeschnittenen zweiten Elektrodensegments (36.2) und/oder der Transporteinheit (62).

7. Monozell-Herstellverfahren nach einem der voranstehenden Ansprüche, wobei Schritt A) enthält:
a) Bereitstellen eines bahnförmigen ersten Elektrodensubstrats (50.1);
b) Aufnehmen des bahnförmigen ersten Elektrodensubstrats (50.1) mittels eines ersten Transportsystems (40.1), das entlang einer Führungsbahn (60) einzeln bewegbare Transporteinheiten (62) aufweist, und ebenes Bewegen des ersten Elektrodensubstrats (50.1) entlang einer Schneidebene (64);
c) Schneiden des bahnförmigen ersten Elektrodensubstrats (50.1) in der Schneidebene (64), um erste Elektrodensegmente (36.1) abzuschneiden, die jeweils einzeln auf einer der Transporteinheiten (62) angeordnet sind;
d) Einstellen eines Abstands zwischen abgeschnittenen ersten Elektrodensegmenten (36.1) mittels Relativbewegung der Transporteinheiten (62), um die ersten Elektrodensegmente (36.1) relativ zueinander zu positionieren;
e) Bereitstellen der ersten Separatorbahn (34.1);
f) Aufbringen und Fixieren der relativ zueinander positionierten ersten Elektrodensegmente (36.1) auf der ersten Separatorbahn (34.1).

8. Batteriezellstapelherstellverfahren zum Herstellen eines Zellstapels für eine Batterie, umfassend Durchführen des Monozell-Herstellverfahrens nach einem der voranstehenden Ansprüche und Aufstapeln der dadurch hergestellten Monozellen (86) zu einem Zellstapel (22).

9. Monozell-Herstellvorrichtung (24), umfassend eine Elektrodenstrangbereitstelleinrichtung (28) zum Bereitstellen eines ersten Elektrodenstrangs (32) mit einer ersten Separatorbahn (34.1) und daran mit Abstand zueinander angebrachten und fixierten ersten Elektrodensegmenten (36.1),
eine Positionier- und Laminiereinrichtung (30), die dazu eingerichtet ist, zweite Elektrodensegmente (36.1) auf dem ersten Elektrodenstrang (32) ausgerichtet zu den ersten Elektrodensegmenten (36.1) zu positionieren und die zweiten Elektrodensegmente (36.2) und eine zweite Separatorbahn (34.2) auf den ersten Elektrodenstrang (32) direkt zu laminieren, und eine Vereinzelungseinrichtung (90) zum Vereinzeln von Monozellen (86) durch Abschneiden von dem durch die Positionier- und Laminiereinrichtung erhaltenen Strang (88).

10. Monozell-Herstellvorrichtung (24) nach Anspruch 9, **dadurch gekennzeichnet,**
**dass** die Elektrodenstrangbereitstelleinrichtung (28) und/oder die Positionier- und Laminiereinrichtung (30) jeweils wenigstens eine oder mehrere der folgenden Einrichtungen umfassen:
eine Elektrodensubstratbereitstelleinrichtung (38.1, 38.2) zum Bereitstellen eines bahnförmigen Elektrodensubstrats (50.1, A; 50.2, K);
ein Transportsystem (40.1, 40.2), das entlang einer Führungsbahn (60) einzeln bewegbare Transporteinheiten (62) aufweist, wobei das Transportsystem (40.1, 40.2) dazu eingerichtet ist, das von der Elektrodensubstratbereitstelleinrichtung (38.1, 38.2) bereitgestellte bahnförmige Elektrodensubstrat (50.1, 50.2) aufzunehmen und eben entlang einer Schneidebene (64) zu bewegen;
eine Schneideinrichtung (42.1, 42.2) zum Schneiden des Elektrodensubstrats (50.1, A; 50.2, K) entlang einer ein- oder zweidimensional in der Schneidebene (64) verlaufenden Schneidkontur, um Elektrodensegmente (36.1, 36.2) von dem Elektrodensubstrat (50.1, A; 50.2, K) abzuschneiden;
eine Separatorbahnbereitstelleinrichtung (44.1, 44.2) zum Bereitstellen einer Separatorbahn (34.1, 34.2);
eine Aufbring- und Fixiereinrichtung (46.1, 46.2) zum Aufbringen und Fixieren von relativ zueinander positioniert angelieferten Elektrodensegmente (36.1, 36.2) auf der Separatorbahn (34.1, 34.2).

11. Monozell-Herstellvorrichtung (24) nach Anspruch 10, **dadurch gekennzeichnet, dass** das Transportsystem (40.1, 40.2)
11.1 Transporteinheiten (62) mit austauschbaren Warenträgern aufweist, um durch Austausch von Warenträgern das Transportsystem (40.1, 40.2) an unterschiedliche Elektrodensegmentformate anzupassen; und/oder
11.2 dazu eingerichtet ist, das Elektrodensubstrat in der bahnförmigen und/oder der vereinzelten Form gezielt mittels Vakuums an den einzelnen Transporteinheiten (62) zum Transportieren und Schneiden festzuhalten; und/oder
11.3 als Software ausgebildete Mittel zum Einstellen eines Abstands zwischen abgeschnittenen Elektrodensegmenten (36.1, 36.2) mittels Relativbewegung der Transporteinheiten (62), um die Elektrodensegmente (36.1, 36.2) relativ zueinander zu positionieren, aufweist.

12. Monozell-Herstellvorrichtung (24) nach einem der Ansprüche 9 bis 11, **dadurch gekennzeichnet, dass** die Positionier- und Laminiereinrichtung wenigstens eine oder mehrere der folgenden Einheiten aufweist:
12.1 eine Heizeinrichtung (68) zum gezielten Erwärmen der Elektrodensegmente (36.1, 36.2);
12.2 eine Transporteinrichtung (70) zum Transportieren und Abheben der relativ zueinander positionierten Elektrodensegmente (36.1, 36.2) von einer Anlieferungsebene zu einer Laminierstelle (72, 11);
12.3 eine Vakuum-Heizwalze (74) oder temperierte Walze oder extern temperierte Vakuum-Walze;
12.4 eine vorzugsweise unbeschichtete Laminierwalze (76);
12.5 eine Presseinrichtung (78) zum Ausüben einer Presskraft zum Laminieren.

13. Monozell-Herstellvorrichtung (24) nach einem der Ansprüche 9 bis 12, umfassend eine Steuerung (48.1, 48.2), die dazu eingerichtet ist, die Monozell-Herstellvorrichtung (24) zum Durchführen des Monozell-Herstellverfahrens nach einem der Ansprüche 1 bis 7 anzusteuern.

14. Zellstapelherstellvorrichtung (20), umfassend eine Monozell-Herstellvorrichtung (24) nach einem der Ansprüche 9 bis 13 und eine Stapeleinrichtung (26) zum Stapeln mehrerer durch die Monozell-Herstellvorrichtung (24) hergestellter Monozellen (86) zu einem Zellstapel (22).

15. Computerimplementierte Steuerung (48.1, 48.2, 80) für eine Vorrichtung (28.1, 28.2, 24, 20) nach einem der Ansprüche 9 bis 14, dazu eingerichtet, die Vorrichtung (28.1, 28.2, 24, 20) zum Durchführen des Verfahrens nach einem der Ansprüche 1 bis 10 anzusteuern.
